# EUROPEAN PATENT APPLICATION

(11) **EP 3 608 349 A1**
(43) Date of publication of application: **12.02.2020**
(21) Application number: 18306082.1
(22) Date of filing: 06.08.2018
(51) Int. Cl.: C08G 69/26, B33Y 70/00, B29C 64/153

(54) **PARTICULATE POLYAMIDE COMPOSITION FOR POWDER BED FUSION APPLICATIONS AND METHODS FOR THE PREPARATION THEREOF**

(71) Applicant: RHODIA OPERATIONS, 75009 Paris (FR)
(72) Inventor: SEIGNOBOS, Elodie, 69230 Saint-Genis-Laval (FR); BADEL, Thierry, 69008 Lyon (FR); PLOUCHART, Sébastien, 69110 SAINTE-FOY-LES-LYON (FR); NEBUT, Sébastien, 01600 Reyrieux (FR); MOINEAU, Christophe, 69500 Bron (FR); GIANNOTTA, Dominique, 69360 Communay (FR)
(74) Representative: Chatelan, Florence Anne

(57) **Abstract**

The invention relates to a particulate polyamide composition (P), comprising:
(A) 50 to 100 wt.-%, based on the total weight of the particulate polyamide composition (P), of at least one particulate copolyamide (A) obtainable by polycondensation of a monomer mixture comprising at least the following monomers (a-1), (a-2) and optionally component (a-3):
(a-1) 85 to 98 mol-%, based on the total monomer composition comprising the monomers (a-1), (a-2) and optionally (a-3), of at least one aliphatic carboxylic diacid (a-1.1) and at least one aliphatic diamine (a-1.2) or/and at least one salt thereof (a-1.3);
(a-2) 2 to 15 mol-%, based on the total monomer composition comprising the monomers (a-1), (a-2) and optionally (a-3), of at least one comonomer, which is different from the monomers (a-1) and which is able to undergo a polycondensation reaction with the monomers (a-1), wherein at least one of those comonomers is selected from the group of aromatic carboxylic diacids (a-2.1.1), aromatic diamines (a-2.1.2), cycloaliphatic carboxylic diacids (a-2.2.1), cycloaliphatic diamines (a-2.2.2), phosphorated carboxylic diacids (a-2.3.1) and / or phosphorated diamines (a-2.3.2), or at least one salt (a-2.4) thereof; and
(a-3) 0 to 10 mol-%, based on the total monomer composition comprising the monomers (a-1), (a-2) and optionally (a-3), of at least one chain regulating agent (a-3.1) and / or branching agent (a-3.2);

(B) 0 to 50 wt.-%, based on the total weight of the particulate polyamide composition (P), of at least one additive (B);
wherein the amount of the first cyclic oligomer (ABc) derived from the repeating units of monomers (a-1) is below or equal to 0.1 wt.-%, based on the total weight of the particulate copolyamide (A);
and wherein the particulate copolyamide (A) has a mean particle diameter D₅₀ between 10 µm and 100 µm.

## Description

The invention relates to particulate polyamide compositions which exhibit excellent processing properties in powder bed fusion applications for the preparation of three-dimensional articles. The invention further relates to a process for preparing such particulate polyamide compositions, the use of the particulate polyamide compositions as well as the three-dimensional articles prepared therefrom by powder bed fusion methods including Selective Laser Sintering (SLS) or Multi Jet Fusion (MJF).

### PRIOR ART

The method for manufacturing articles by selective fusion of polymer powder layers is a method which allows components with complex shapes to be obtained without tooling and without machining, from a three-dimensional image of the article to be produced, by sintering superposed layers of polymeric powders, especially by means of a laser. This is generally done using thermoplastic polymers. General aspects of rapid prototyping by laser sintering are referred to in U.S. Pat. No. 6,136,948 and in patent applications WO 96/06881 and US20040138363. The technology of agglomerating polyamide powders under electromagnetic radiation is used to manufacture three-dimensional objects for diverse applications, especially prototypes and models.

In a method for manufacturing articles by selective fusion of polyamide powder layers, a layer of polyamide powder is laid down on a horizontal plate maintained in a chamber heated to a temperature between the crystallization temperature Tc and the melting temperature Tm of the polyamide powder. Electromagnetic radiation, especially a laser as used in selective laser sintering (SLS), then agglomerates powder particles of the powder layer by means of a computer whose memory contains the shape of the object and reproduces this shape in the form of slices. A new layer of powder is then laid down, and the laser agglomerates the powder particles according to a geometry corresponding to this new slice of the object, and so on. The procedure is repeated until the entire object has been manufactured.

Multi Jet Fusion (MJF) s a powder bed fusion technology different from Selective Laser Sintering (SLS). In the Multi Jet Fusion process, the powder bed is heated uniformly at the outset. A fusing agent is jetted where particles need to be selectively molten, and a detailing agent is jetted around the contours to improve part resolution. While lamps pass over the surface of the powder bed, the jetted material captures the heat and helps distribute it evenly

Particulate polyamide compositions suitable for powder bed fusion methods, such as selective laser sintering (SLS) or multi jet fusion (MJF), require a specific thermal profile, with a high temperature difference between the melting temperature and the crystallization temperature of the polyamide composition.

Present technologies for additive manufacturing of three-dimensional objects by powder bed fusion methods, such as Selective Laser Sintering (SLS) or Multi Jet Fusion (MJF), using particulate polyamide compositions are typically based on based on polyamides with melting temperatures below 220°C. Those polyamides show a low crystallization temperature which is advantageous from the viewpoint of processability. In addition, the processing temperature is relatively low.

WO 2012/076528 relates to a method for manufacturing articles by selective fusion of polymer powder layers, especially the rapid prototyping by solid-phase laser sintering of a powder based on a copolyamide of type 6 having a low enthalpy of cold crystallization. The method comprises manufacturing the article by selective fusion of layers using a powder comprising at least one copolyamide having an enthalpy of cold crystallization of less than 80 J/g, as measured by protocol P; wherein the at least one copolyamide comprises at least 80 mol % of caprolactam monomer or the corresponding amino acid, based on the number of moles of the total mixture of monomers and comonomers, and at least one aromatic or cycloaliphatic comonomer; and wherein the protocol P involves measuring the enthalpy of cold crystallization by modulated differential calorimetry analysis that comprises:
a) first holding the copolyamide at a temperature of 25°C for 5 minutes,
b) performing a modulated rise in temperature to 250°C at a rate of 3°C/min with a sinusoidal amplitude of 0.48°C and a period of 1 minute, and recording a signal, and
c) measuring an area of exothermic peak Δ Hcc, corresponding to the enthalpy of cold crystallization of the copolyamide.

US 6,136,948 provides a laser-sinterable powder product and a method of producing a three-dimensional object from the powder product, the method comprising the steps of:
applying a layer of the powder at a target surface, the powder comprised of a semi-crystalline organic polymer, the powder having a melting peak and a recrystallization peak, as shown in differential scanning calorimetry traces, which slightly overlap when measured at a scanning rate of 10-20° C./minute;
directing energy at selected locations of the layer corresponding to the cross-section of the object to be formed in the layer, to fuse the powder thereat;
repeating the applying and directing steps to form the object in layerwise fashion; and removing unfused powder from the object. Preferably, the polymer is selected from a group consisting of polyacetal, polypropylene, polyethylene and ionomers.

WO 96/06881 provides a laser-sinterable powder comprised of an unblended polymer, said powder having a melting peak and a recrystallization peak, as shown in differential scanning calorimetry traces, which do not overlap when measured at a scanning rate of 10-20°C/minute, a crystallinity in the range from 10-90% as measured by differential scanning calorimetry, a number average molecular weight in the range from about 30,000 to 500,000 and a molecular weight distribution Mw/Mn in the range from 1 to 5. Preferably, the polymer is selected from a group consisting of Nylon 11, polyacetal, polypropylene, polyethylene and ionomers. In a further preferred embodiment, the powder has a melting point below 200°C.

US 2004/0138363 relates to a laser sintering powder comprising at least one polyamide and titanium dioxide particles. The sintering powder preferably comprises a polyamide having at least 8 carbon atoms per carboxamide group, more preferably selected from nylon-6,12, nylon-11, and nylon-12.

EP 2 488 572 discloses a method for preparing a recyclable polyamide powder, said method including the following consecutive steps:
a) a step of adding 0.01 to 5 wt% of at least one antioxidant in powder form to a mixture including 20 to 95 wt% of polyamide powder and 5 to 80 wt% of liquid, relative to the weight of said mixture, said polyamide powder having a pH in the range from 3 to 8 and a yellowness index of less than 4, measured according to standard ASTM E 313-05, D1925, said liquid being non-solvent for polyamide at a temperature between 5 °C and the boiling temperature Teb of said liquid;
b) a step of homogenizing the mixture obtained in step a);
c) a step of recovering powder isolated from the liquid.

EP 2 530 121 relates to process for increasing the recyclability of a polyamide in a sintering process, wherein at least 4000 ppm of at least one acid is incorporated in the polyamide, where the acid is a polyphosphoric acid, boric acid, acid salt, ester and/or anhydride.

US 2018/0094103 discloses a polyamide powder for powder bed fusion methods. The polymer exhibits a solution viscosity according to ISO 307 of 1.55 to 1.75 and an increase in solution viscosity of 10% to 40%, preferably 20% to 30%, when under a nitrogen atmosphere it is subjected to a temperature 10° C below its melting temperature for 24 h.

WO 2018/019728 relates to a method for producing a molded body by selective laser sintering of a sintered powder (SP). The sintered powder (SP) contains at least one partially crystalline polyamide, at least one polyamide 6I/6T and at least one reinforcing agent. The sintered powder (SP) is characterized by having a broadened sintering window (WSp).

There is a need for polyamide compositions for powder bed fusion applications with melting temperature of more than or equal to 220°C for high temperature applications. Polyamide compositions with higher melting points typically have a high crystallization temperature and exhibit only a small or even no temperature range in which this polymer composition is processible by selective layer melting.

An object of the present invention is to remedy these drawbacks by proposing a particulate polyamide composition, which is appropriate to be used in powder bed fusion applications and which has a high melting temperature to obtain article suitable for high temperature applications.

### DESCRIPTION OF THE INVENTION

The present invention relates to a particulate polyamide composition (P) comprising (or consisting of):
(A) 50 to 100 wt.-%, based on the total weight of the particulate polyamide composition (P), of at least one particulate copolyamide (A) obtainable by polycondensation of a monomer mixture comprising at least the following monomers (a-1), (a-2) and optionally component (a-3):
   (a-1) 85 to 98 mol-%, based on the total monomer composition comprising the monomers (a-1), (a-2) and optionally (a-3), of at least one aliphatic carboxylic diacid (a-1.1) and at least one aliphatic diamine (a-1.2) or/and at least one salt thereof (a-1.3);
   (a-2) 2 to 15 mol-%, based on the total monomer composition comprising the monomers (a-1), (a-2) and optionally (a-3), of at least one comonomer, which is different from the monomers (a-1) and which is able to undergo a polycondensation reaction with the monomers (a-1), wherein at least one of those comonomers is selected from the group of aromatic carboxylic diacids (a-2.1.1), aromatic diamines (a-2.1.2), cycloaliphatic carboxylic diacids (a-2.2.1), cycloaliphatic diamines (a-2.2.2), phosphorated carboxylic diacids (a-2.3.1) and / or phosphorated diamines (a-2.3.2), or at least one salt (a-2.4) thereof; and
   (a-3) 0 to 10 mol-%, based on the total monomer composition comprising the monomers (a-1), (a-2) and optionally (a-3), of at least one chain regulating agent (a-3.1) and / or at least one branching agent (a-3.2);
(B) 0 to 50 wt.-%, based on the total weight of the particulate polyamide composition (P), of at least one additive (B);
wherein the amount of the first cyclic oligomer (further herein also referred to as (ABc)) derived from the repeating units of monomers (a-1) is below or equal to 0.1 wt.-%, preferably below or equal to 0.09 wt.-%, based on the total weight of the particulate copolyamide (A); and wherein the particulate copolyamide (A) has a mean particle diameter D₅₀ between 10 µm and 100 µm.

The inventors surprisingly found that the above particulate polyamide composition (P) is advantageously used in powder bed fusion methods and combines both a proper process window with low generation of dust and high thermomechanical properties of the final product.

The term "first cyclic oligomer (ABc)" refers to the smallest cyclic oligomer derived from the repeating units of monomers (a-1), thus representing a cyclic dimer derived from one aliphatic carboxylic diacid and one aliphatic diamine. In the abbreviation (ABc), A stands for the diamine compound, B stands for the diacid compound and c stands for cyclic. It was found that these amounts of oligomers (ABc) in the polyamide composition according to the invention are particularly crucial for the properties of the product. In case of PA66 the oligomer (ABc) is the cyclic dimer derived from the repeating units (i.e. the cyclic reaction product of one hexamethylene diamine molecule and one adipic acid molecule), having a molecular weight of 226 g/mol.

It was observed by the inventors that conventional polyamide compositions applied in powder bed fusion methods ad high temperatures result in deposits and dusts on the surface of the powder bed fusion machines. This effect could be attributed to the presence of oligomers in the polyamide compositions. Due to high processing temperature in the powder bed fusion applications using polyamide compositions with higher melting point, oligomers sublimate and condense inside powder bed fusion device. These sublimated oligomers may deposit at the surface of heating system, temperature sensors, laser lenses, etc., thereby altering the efficiency of the heating unit devices. Moreover,

It was found by the inventors that an incomplete polycondensation reaction or a degradation of the polycondensation product can result in the presence of a significant amount of the first cyclic oligomer (ABc) derived from the repeating units of monomers (a-1). However, these oligomers (ABc) tend to exhale / evaporate from the copolymer A) during the processing, in particular since high processing temperatures are required for the processing copolymer A). During powder bed fusion processing, the oligomers (ABc) are then prone to condensate on the surface of cooler parts of the powder bed fusion machine. This may effect severe disturbances of the machine parts and the entire process.

It was surprisingly found by the inventors that by using a copolyamide (A), meeting the requirements defined above it is possible to provide a particulate polyamide composition (P) which is suited to be used in powder bed fusion methods even at high temperatures without negative effects being observed due to the deposition of low molecular weight by-products, in particular oligomers (ABc).

The components of the polyamide composition and the preferred embodiments of to the invention are described in more detail in the following.

### Copolyamide (A)

The inventive particulate polyamide composition (P) comprises 50 to 100 wt.-%, preferably 55 to 95 wt.-%, based on the total weight of the particulate polyamide composition (P), of at least one particulate copolyamide (A) obtainable by polycondensation of a monomer composition comprising the monomers (a-1), (a-2) and optionally component (a-3), which are described in detail in the following.

### Monomers (a-1)

Monomers (a-1) constitute at least 85 to 98 mol-% of the total monomer composition and are selected from at least one aliphatic carboxylic diacid (a-1.1) and at least one aliphatic diamine (a-1.2) or at least one salt (a-1.3) thereof.

The total content of the at monomers (a-1) in the monomer composition is at least 85 mol-%, preferably at least 86 mol-%, more preferably at least 87 mol-%, even more preferably at least 88 mol-%, in particular at least 89 mol-%, and most preferably at least 90 mol-%. The total content of the at monomers (a-1) in the monomer composition is at most 98 mol-%, preferably at most 97 mol-%, more preferably at most 96 mol-%, and most preferably at most 95 mol-%.

If the amount of monomers (a-1) is below 85 mol-% or above 98 mol-%, the processing temperature window Δ T may be too narrow.

Monomers (a-1) are selected from at least one aliphatic carboxylic diacid (a-1.1) and at least one aliphatic diamine (a-1.2) or at least one salt (a-1.3) thereof.

Suitable aliphatic dicarboxylic acids (a-1.1) comprise all aliphatic dicarboxylic acids commonly used in the preparation of polyamides. Preferred aliphatic dicarboxylic acids include dicarboxylic acids of the general formula (I): 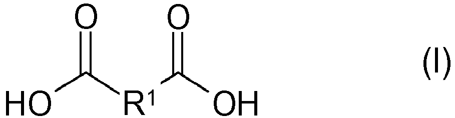 wherein
R¹ represents an aliphatic, saturated or unsaturated, linear or branched hydrocarbon group having 1 to 20, preferably, 2 to 10, and in particular 3 to 6 carbon atoms.

In a particular preferred embodiment, adipic acid is used as aliphatic dicarboxylic acid.

Suitable aliphatic diamines (a-1.2) comprise all aliphatic diamines commonly used in the preparation of polyamides. Preferred aliphatic dicarboxylic acids include dicarboxylic acids of the general formula (II): 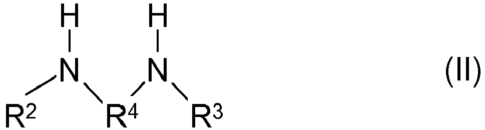 wherein
R² and R³ each independently represent a hydrogen atom or an aliphatic, saturated or unsaturated, linear or branched hydrocarbon group having 1 to 5, preferably 1 to 3, carbon atoms; and
R⁴ represents an aliphatic, saturated or unsaturated, linear or branched hydrocarbon group having 1 to 20, preferably, 2 to 10, and in particular 3 to 6 carbon atoms.

In a preferred embodiment, R¹ and R² represent a hydrogen atom.

Preferred aliphatic diamines include hexamethylene diamine and / or the 5-methyl pentamethylene diamine. In a particular preferred embodiment hexamethylene diamine is used.

Suitable aliphatic salts (a-1.3) of aliphatic carboxylic acids and aliphatic carboxylic diamines comprise all salts of the above described aliphatic carboxylic acids (a-1.1) and aliphatic carboxylic diamines (a-1.2). Preferred salts include salts of the general formula (III): 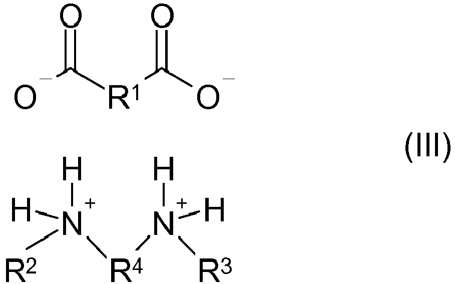 wherein
R¹ to R⁴ are defined as above.

In a preferred embodiment of the invention, the at least one aliphatic carboxylic diacid (a-1.1) and at least one aliphatic diamine (a-1.2) or at least one salt thereof (a-1.3) is selected from at least one aliphatic carboxylic diacid comprising 3 to 10 carbon atoms, preferably 4 to 8 carbon atoms, and at least one aliphatic diamine comprising 3 to 10 carbon atoms, preferably 4 to 8 carbon atoms, as well as the salts thereof.

Particular preferred is an embodiment, wherein the at least one aliphatic carboxylic diacid (a-1.1) and at least one aliphatic diamine (a-1.2) or at least one salt thereof (a-1.3) is selected from adipic acid, hexamethylene diamine or the salt of adipic acid and hexamethylene, i.e. hexamethylenediamine adipate. In a further preferred embodiment of the invention, the copolyamide (A) is prepared by reacting hexamethylenediamine adipate (nylon 6.6 salt) with the at least one comonomer (a-2).

### Comonomer (a-2)

Comonomers (a-2) constitute at least 2 to 15 mol-% of the total monomer composition for the preparation of copolyamide (A), are different from the monomers (a-1) and which are able to undergo a polycondensation reaction with the monomers (a-1). At least one of those comonomers (a-2) is selected from the group of aromatic carboxylic diacids (a-2.1.1), aromatic diamines (a-2.1.2), cycloaliphatic carboxylic diacids (a-2.2.1), cycloaliphatic diamines (a-2.2.2), phosphorated carboxylic diacids (a-2.3.1) and / or phosphorated diamines (a-2.3.2), or at least one salt (a-2.4) thereof.

The incorporation of the comonomers (a-2) in the copolyamide (A) in the mentioned amounts could result in a decreased crystallinity and a broadened processing temperature window Δ T between the melting temperature and the crystallization temperature compared to a polyamide only consisting of monomers (a-1).

The total content of the at least one comonomer (a-2) in the monomer composition is at least 2 mol-%, preferably at least 3 mol-%, more preferably at least 4 mol-%, and most preferably at least 5 mol-%. The total content of the at least one comonomer (a-2) in the monomer composition is at most 15 mol-%, preferably at most 14 mol-%, more preferably at most 13 mol-%, even more preferably at most 12 mol-%, in particular at most 11 mol-%, and most preferably at most 10 mol-%. In a particular preferred embodiment, the total content of the at least one comonomer (a-2) in the monomer composition is between 2 mol-% and 15 mol-%, more preferably between 4 mol-% and 12 mol-%.

At least one of the comonomers (a-2) is selected from the group of aromatic carboxylic diacids (a-2.1.1), aromatic diamines (a-2.1.2), cycloaliphatic carboxylic diacids (a-2.2.1), cycloaliphatic diamines (a-2.2.2), phosphorated carboxylic diacids (a-2.3.1) and / or phosphorated diamines (a-2.3.2), or at least one salt (a-2.4) thereof.

In one preferred embodiment, the at least one comonomer (a-2) is selected from the group comprising aromatic carboxylic diacids (a-2.1.1) and/or aromatic diamines (a-2.1.2).

Suitable aromatic dicarboxylic acids (a-2.1.1) comprise all aromatic dicarboxylic acids commonly used in the preparation of polyamides. Preferred aromatic dicarboxylic acids include dicarboxylic acids of the general formula (IV): 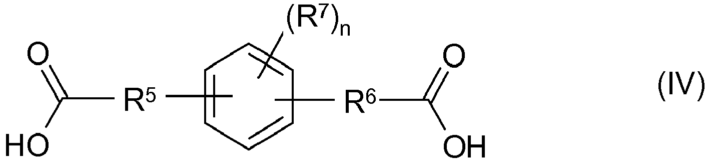 wherein
R⁵ and R⁶ each independently represent a single bond or an aliphatic or aromatic, saturated or unsaturated, linear, branched or cyclic hydrocarbon group having 1 to 20, preferably, 2 to 10, and in particular 3 to 6 carbon atoms;
R⁷ represents a hydrogen atom, a hydroxyl group, a sulfoisophthalic acid group and salts thereof, or an aliphatic hydrocarbon group having 1 to 3 carbon atoms; and n represents an integer from 0 to 4.

In a preferred embodiment, R⁵ and R⁶ each represent a single bond and the carboxylic group is directly bonded to the aromatic ring.

In a further preferred embodiment R⁷ represents a hydrogen atom, a hydroxyl group or a sulfoisophthalic salt.

R⁵ and R⁶ may be positions in ortho-, meta-, or para-position to each other at the aromatic ring. It is particular preferred that the groups R⁵ and R⁶ are position meta- or para-position.

In a particular preferred embodiment, the at least one aromatic dicarboxylic acid is selected from terephthalic acid and isophthalic acid, both optionally substituted at the aromatic ring with a hydroxyl group. As a preferred example for such a substituted aromatic carboxylic diacid, 5-hydroxy isophthalic acid can be mentioned.

Suitable aromatic diamines (a-2.1.2) comprise all aromatic diamines commonly used in the preparation of polyamides. Preferred aromatic diamines include diamines of the general formula (V): 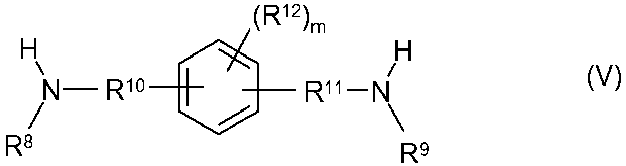 wherein
R⁸ and R⁹ each independently represent a hydrogen atom or an aliphatic, saturated or unsaturated, linear or branched hydrocarbon group having 1 to 5, preferably 1 to 3, carbon atoms;
R¹⁰ and R¹¹ each independently represent a single bond or an aliphatic or aromatic, saturated or unsaturated, linear, branched or cyclic hydrocarbon group having 1 to 20, preferably, 2 to 10, and in particular 3 to 6 carbon atoms;
R¹² represents a hydrogen atom, a hydroxyl group or an aliphatic hydrocarbon group having 1 to 3 carbon atoms; and
n represents an integer from 0 to 4.

In a preferred embodiment, R¹⁰ and R¹¹ each represent a single bond and the amine group is directly bonded to the aromatic ring.

In a preferred embodiment, R⁸ and R⁹ each represent a hydrogen atom.

In a further preferred embodiment, R⁹ represents a hydrogen atom or a hydroxyl group.

R⁷ and R⁸ may be positions in ortho-, meta-, or para-position to each other at the aromatic ring. It is particular preferred that the groups R⁷ and R⁸ are position meta- or para-position.

Preferred aromatic diamines include m-phenylene diamine and p-phenylene diamine.

In an alternative preferred embodiment, the at least one comonomer (a-2) is selected from the group comprising cycloaliphatic carboxylic diacids (a-2.2.1) and / or cycloaliphatic diamines (a-2.2.2).

Suitable cycloaliphatic carboxylic diacids (a-2.2.1) comprise all cycloaliphatic dicarboxylic acids commonly used in the preparation of polyamides. Preferred cycloaliphatic dicarboxylic acids include dicarboxylic acids of the general formula (VI): 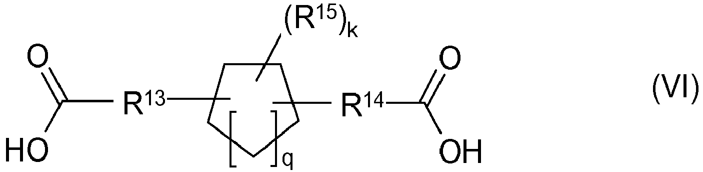 wherein
R¹³ and R¹⁴ each independently represent a single bond or an aliphatic, saturated or unsaturated, linear, branched or cyclic hydrocarbon group having 1 to 20, preferably, 2 to 10, and in particular 3 to 6 carbon atoms;
R¹⁵ represents a hydrogen atom, a hydroxyl group or an aliphatic hydrocarbon group having 1 to 3 carbon atoms;
q represents an integer from 0 to 3; and
k is q + 3.

In a preferred embodiment, R¹³ and R¹⁴ each represent a single bond and the carboxylic group is directly bonded to the cycloaliphatic ring.

In a further preferred embodiment R¹⁵ represents a hydrogen atom or a hydroxyl group.

R¹³ and R¹⁴ may be positions in ortho-, meta-, or para-position to each other at the cycloaliphatic ring. It is particular preferred that the groups R¹⁰ and R¹¹ are position meta- or para-position.

In a further preferred embodiment q is 1.

In a particular preferred embodiment, the at least one cycloaliphatic dicarboxylic acid is selected from cyclohexane dicarboxylic acid.

Suitable cycloaliphatic diamines (a-2.2.2) comprise all cycloaliphatic diamines commonly used in the preparation of polyamides. Preferred aromatic diamines include diamines of the general formula 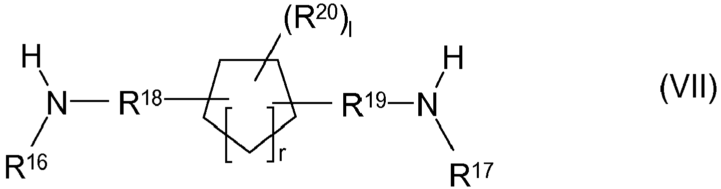 wherein
R¹⁶ and R¹⁷ each independently represent a hydrogen atom or an aliphatic, saturated or unsaturated, linear or branched hydrocarbon group having 1 to 5, preferably 1 to 3, carbon atoms;
R¹⁸ and R¹⁹ each independently represent a single bond or an aliphatic, saturated or unsaturated, linear, branched or cyclic hydrocarbon group having 1 to 20, preferably, 1 to 10, and in particular 1 to 6 carbon atoms;
R²⁰ represents a hydrogen atom, a hydroxyl group or an aliphatic hydrocarbon group having 1 to 3 carbon atoms; and
r represents an integer from 0 to 3; and
l is r + 3.

In one embodiment, R¹⁸ and R¹⁹ each represent a single bond and the amine group is directly bonded to the aromatic ring. In an alternative one embodiment, R¹⁸ and R¹⁹ each represent an aliphatic, saturated, linear, hydrocarbon group having 1 to 20, preferably, 1 to 10, and in particular 1 to 6 carbon atoms. In a preferred embodiment, R⁷ and R⁸ are different from each other.

In a preferred embodiment, R¹⁶ and R¹⁷ each represent a hydrogen atom.

In a further preferred embodiment, R²⁰ represents a hydrogen atom or a hydroxyl group.

R¹⁸ and R¹⁹ may be positions in ortho-, meta-, or para-position to each other at the cycloaliphatic ring. It is particular preferred that the groups R¹⁸ and R¹⁹ are position meta- or para-position.

In a further preferred embodiment r is 1.

Preferred cycloaliphatic diamines include isophoron diamine (3-aminomethyl-3,5,5-trimethylcyclohexylamine), 1,2-diamine cyclohexane, and 1,3-diamino cyclohexane).

In an alternative preferred embodiment, the at least one comonomer (a-2) is selected from the group comprising phosphorated carboxylic diacids (a-2.3.1) and / or phosphorated diamines (a-2.3.2).

Suitable phosphorated carboxylic diacids (a-2.3.1) comprise all phosphorated carboxylic diacids commonly used in the preparation of polyamides. Preferred phosphorated carboxylic diacids include dicarboxylic acids of the general (VIII): 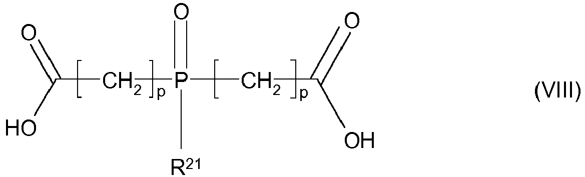 wherein
R²¹ is an alkyl group comprising 1 to 5 carbon atoms, in particular a sec-butyl group, an isobutyl group or a tert-butyl group; and
p is an integer from 1 to 3, preferably 2.

In a particular preferred embodiment, the at least one aromatic dicarboxylic acid is selected from isophthalic acid, terephthalic acid, diphenic acid, and 2,6-naphthalenedicarboxylic acid

Suitable phosphorated diamines (a-2.3.2) comprise all phosphorated diamines commonly used in the preparation of polyamides. Preferred phosphorated carboxylic diacids include dicarboxylic acids of the general formulae (VIII), wherein R²¹ is selected from sec-butyl group, an isobutyl group and a tert-butyl group and p is 2.

In an alternative preferred embodiment, the at least one comonomer (a-2) is selected from at least one salt (a-2.4) of at least one of the comonomers (a-2), i.e. selected from the group of aromatic carboxylic diacids (a-2.1.1), aromatic diamines (a-2.1.2), cycloaliphatic carboxylic diacids (a-2.2.1), cycloaliphatic diamines (a-2.2.2), phosphorated carboxylic diacids (a-2.3.1) and / or phosphorated diamines (a-2.3.2). The salt (a-2.4) is characterized by comprising the reaction product of at least one carboxylic diacid with at least one diamine, wherein at least one of the at least one carboxylic diacid and / or the at least one diamine is selected from the group of aromatic carboxylic diacids (a-2.1.1), aromatic diamines (a-2.1.2), cycloaliphatic carboxylic diacids (a-2.2.1), cycloaliphatic diamines (a-2.2.2), phosphorated carboxylic diacids (a-2.3.1) and / or phosphorated diamines (a-2.3.2). However, the at least one carboxylic diacid and/or at least one diamine can also be combined with carboxylic diacid and / or diamine different from comonomers (a-2), in particular with aliphatic carboxylic diacids and or diamines as defined as monomers (a-1) to from the salt (a-2.4).

Thus, the comonomers (a-2) can further comprise monomer different from (a-2.1.1) to (a-2.4) in order to balance the total amount of carboxylic diacid monomers and diamine monomer in the monomer composition to a molar ratio of carboxylic diacid : diamine within the range of 1:0.9 to 1:1.1, preferably 1:0.95 to 1:1.05, and most preferably to a molar ratio of 1:1.

In one aspect of the invention, only one comonomer (a-2), selected from the group of aromatic carboxylic diacids (a-2.1.1), aromatic diamines (a-2.1.2), cycloaliphatic carboxylic diacids (a-2.2.1), cycloaliphatic diamines (a-2.2.2), phosphorated carboxylic diacids (a-2.3.1) and / or phosphorated diamines (a-2.3.2), whereas the remainder is selected from the at least one aliphatic carboxylic diacid (a-1.1) and at least one aliphatic diamine (a-1.2), respectively.

In a preferred embodiment of the invention, the at least one comonomer (a-2) is at least one selected from the group consisting of aromatic carboxylic diacids (a-2.1.1) and cycloaliphatic diamines (a-2.2.2).

### Component (a-3)

The monomer mixture for preparing the copolyamide (A) can optionally comprise at least one chain regulating agent and / or branching agent (a-3) in an amount of from 0 to 10 mol.-% based on the total monomer composition, preferably of from 0.1 to 8 mol-%, and in particular of from 0.5 to 6 mol-%.

Suitable chain regulating agents (a-3.1) include, but are not limited to monofunctional acids and monofunctional amines. Preferred monofunctional are selected from the group consisting of acetic acid, propionic acid, butyric acid, valeric acid, caproic acid, caprylic acid, lauric acid, stearic acid, cyclohexanecarboxylic acid, and benzoic acid. Most preferred are monofunctional acids selected from acetic acid and benzoic acid. Preferred monofunctional amines are selected from the group consisting of methylamine, ethylamine, butylamine, hexylamine, octylamine, benzylamine, dodecylamine, cyclohexylamine.

Suitable branching agents (a-3.2) include, but are not limited tobishexamethylene triamine, trimesic acid, and 2,2,6,6-tetrakys(carboxyethyl)cyclohexanone.

### Copolyamide (A)

The copolyamide (A) is prepared by a polycondensation reaction. The reaction is described in further detail below. The polycondensation product, i.e. the copolyamide (A), has substantially the same composition as the starting monomer mixture. Thus, in one embodiment of the invention, the copolyamide (A) comprises (or consists of):
(a-1) 85 to 98 mol-% of repeating units derived from at least one aliphatic carboxylic diacid (a-1.1) and at least one aliphatic diamine (a-1.2) or/and at least one salt thereof (a-1.3); (a-
2) 2 to 15 mol-% of repeating units derived from at least one comonomer, which is different from the monomers (a-1) and which is able to undergo a polycondensation reaction with the monomers (a-1), wherein at least one of those comonomers is selected from the group of aromatic carboxylic diacids (a-2.1.1), aromatic diamines (a-2.1.2), cycloaliphatic carboxylic diacids (a-2.2.1), cycloaliphatic diamines (a-2.2.2), phosphorated carboxylic diacids (a-2.3.1) and / or phosphorated diamines (a-2.3.2), or at least one salt (a-2.4) thereof; and
(a-3) 0 to 10 mol.-% of repeating units derived from of at least one chain regulating agent (a-3.1) and / or branching agent (a-3.2);
wherein the mol-% is based to the molar ratio of repeating units in the copolyamide (A).

The further definitions and preferred embodiments described above with respect to the constituents (a-1), (a-2) and (a-3) are applicable accordingly, in particular with respect to the amounts and chemical nature of the constituents.

The copolyamide (A) typically has a melting temperature above 200°C, preferably above 210°C, more preferably above 220°C and in particular above 225°C.

In one embodiment of the invention, the copolyamide (A) has a peak melting point between 220°C and 300°C, preferably between 230°C and 290°C.

In a further preferred embodiment, copolyamide (A) has a processing temperature window Δ T (Tₘ^{onset} - T_{c}^{onset}) between the melting temperature and the crystallization temperature of at least 15°C, preferably at least 18°C, more preferably at least 20°C, even more preferably 22°C, and in particular at least 25°C.

The determination of the melting temperature, the crystallization temperature, as well as the processing temperature window Δ T is determined by differential scanning analysis (DSC) according to the following protocol P:
1) Holding a copolyamide sample A) for 1 min at 25°C;
2) Heating the copolyamide sample A) from 25°C to 235°C at 10°C/min;
3) Holding the copolyamide sample A) for 0.33 min at 235°C;
4) Cooling the copolyamide sample A) from 235°C to 150°C at 10°C/min;
5) Holding the copolyamide sample A) for 5 min at 150°C;
6) Heating the copolyamide sample A) from 150°C to 300°C at 10°C/min;
7) Holding the copolyamide sample A) for 5 min at 300°C;
8) Cooling the copolyamide sample A) from 300°C to 25°C at 10°C/min;
9) Determining Δ T as the difference of temperature between onset of melting peak (Tₘ^{onset}) peak at step 6) and onset of crystallization peak (T_{c}^{onset}) at step 8).

As mentioned previously, it is further essential to the invention that the amount of oligomers (ABc) is below or equal to 0.1 wt.-%, preferably below or equal to 0.09 wt.-%, based on the total weight of the particulate copolyamide (A).

It was found by the inventors that an incomplete polycondensation reaction or a degradation of the polycondensation product can result in the presence of a significant amount of the first cyclic oligomer (ABc) derived from the repeating units of monomers (a-1), i.e. cyclic dimers of one carboxylic diacid and one diamine molecule. However, these oligomers (ABc) tend to exhale / evaporate from the copolymer (A) during the processing, in particular since high processing temperatures are required for the processing copolymer (A).

During powder bed fusion processing, the oligomers (ABc) are then prone to condensate on the surface of cooler parts of the powder bed fusion machine. This may affect severe disturbances of the machine parts and the entire process.

It was found by the inventors that the disturbances are avoided, if a copolyamide (A) is used, which comprises ≤ 0.1 wt.-%, preferably ≤ 0.09 wt.-%, more preferably ≤ 0.08 wt.-%, further more preferably ≤ 0.07 wt.-%, even more preferably ≤ 0.06 wt.-%, even further more preferably ≤ 0.05 wt.-%, in particular ≤ 0.04 wt.-%, and most preferably ≤ 0.03 wt.-%, based on the total weight of the copolyamide (A), of the first cyclic oligomers (ABc) derived from the repeating units of monomers (a-1).

The amount of the first cyclic oligomers (ABc) derived from the repeating units of monomers (a-1) is typically determined by Advanced Polymer Chromatography. In particular, extraction is performed using an alcoholic solvent, preferably methanol, followed by HPLC analysis of the extracted molecules with a solvent comprising water and acetonitrile and using a UV detector. Further reference is made to the detailed description of this method disclosed in the experimental section.

The copolyamide (A) preferably has a viscosity number (VN), determined according to DIN EN ISO 307 in 90 wt.-% formic acid solution of 70 to 190 mL/g, preferably 100 to 160 mL/g.

Furthermore, the copolyamide (A) preferably has a number average molecular weight (Mn), determined by gel permeation chromatography (GPC) of 6,000 to 30,000 g/mol, in particular 10,000 to 20,000 g/mol.

Preferably, the copolyamide is semi-crystalline, preferably having crystallinity between 1 and 50 %, determined by Differential Scanning Calorimetry according to ISO 11357-3.

The particulate polyamide composition (P) comprises copolyamide (A) in form of a particulate copolyamide (A) having a mean particle diameter D₅₀ between 10 µm and 100 µm, preferably between 20 µm and 80 µm, and in particular between 40 µm and 70 µm.

In a preferred embodiment, the particulate polyamide composition (P) comprises copolyamide (A) in form of a particulate copolyamide (A) having a mean particle diameter D₉₀ between 50 µm and 150 µm, preferably between 80 µm and 110 µm.

In a further preferred embodiment, the particulate polyamide composition (P) comprises copolyamide (A) in form of a particulate copolyamide (A) having a mean particle diameter D₁₀ between 10 and 40 µm, preferably between 15 and 35 µm, and most preferably between 20 and 30 µm.

In the context of the present invention "D₁₀" is understood to mean the particle size at which 10% by volume of the particles based on the total volume of the particles are smaller than or equal to the value of D₁₀ and 90% by volume of the particles are larger than the value of D₁₀. By analogy, "D₅₀" is understood to mean the particle size at which 50% by volume of the particles based on the total volume of the particles are smaller than or equal to the value of D₅₀ and 50% of the particles based on the total volume are larger than D₅₀. Similarly, "D₉₀" is understood to mean the particle size at which 90% by volume of the particles based on the total volume of the particles are smaller than or equal to the value of D₉₀ and 10% of the particles based on the total volume are larger than the value of D₉₀.

### Additive (B)

As further constituents, the particulate polyamide composition (P) can further comprise 0 to 50 wt.% of at least one additive (B), including:
(b-1) 0 to 20 wt.-%, preferably 1 to 15 wt.-%, based on the total weight of the particulate polyamide composition (P), of at least one adjuvant (b-1);
(b-2) 0 to 50 wt.-%, preferably 10 to 45 wt.-%, based on the total weight of the particulate polyamide composition (P), of at least one filling agent (b-2);
(b-3) 0 to 20 wt.-%, preferably 1 to 15 wt.-%, based on the total weight of the particulate polyamide composition (P), of at least one coloring agent (b-3);

Suitable adjuvants (b-1) include, but are not limited to, matting agents, heat stabilizers, light stabilizers, anti-nucleating agents, anticaking agents such as silica, flame retardants, toughening modifiers, mould release agents, additives to facilitate the mixing of the components or the moulding of the composition, and end group functionalizers.

In view of the desired application in high temperature environments as well as the process conditions during powder bed fusion methods wherein the particulate polyamide powder is typically heated to temperatures of more than 100°C for several hours, heat stabilizers are particularly preferred adjuvants (b-1) with the scope of the present invention.

Examples of preferred heat stabilizers include hypophosphorous acid and salts thereof, in particular inorganic hypophosphite salts, hindered phenols, hindered amine light stabilizers (HALS). In particular, preference is given to hypophosphorous acid and inorganic hypophosphite salts as heat stabilizers, preferably selected from alkaline metal and earth alkaline metal hypophosphite salts. Further preferred are transition metal hypophosphite salts, wherein the transition metal has the oxidation number selected from +1 or +2.

It was found that inorganic hypophosphite salts not only increase the heat stability of the polyamide composition, but also can improve the quality of the articles prepared by powder bed fusion methods. In particular less warpage and less curls are observed.

In a particular preferred embodiment, the heat stabilizers comprises at least one hypophosphite salt selected from sodium hypophosphite (Na₂(PH₂O₂)), potassium hypophosphite (K₂(PH₂O₂)), lithium hypophosphite (Li₂(PH₂O₂)), calcium hypophosphite (CaPH₂O₂), magnesium hypophosphite (MgPH₂O₂) and manganese hypophosphite (MnPH₂O₂), including their water adducts. From the viewpoint of its high decomposition temperature, manganese hypophosphite (MnPH₂O₂), including its water adducts, is particularly preferably used as heat stabilizer in the particulate polyamide composition (P).

Suitable filling agents (b-2) include, but are not limited to, wollastonite, clays, reinforcing fillers, fibrous components, glass beads, carbon nanotubes, carbon fibers, boron fibers, glass fibers, silica fibers, ceramic fibers, basalt fibres, aramid fibers, polyester fibers, polyethylene fibers,

Suitable coloring agents (b-3) in particular include, but are not limited to, inorganic or organic pigments and dyes. Generally, all coloring agents known in the art to be suitable for applications in polyamide composition are appropriate within the scope of the invention.

### Synthesis of copolyamide (A)

The copolyamide (A) is prepared by copolymerizing the above described monomer composition at least comprising monomers (a-1), comonomers (a-2) and optionally chain regulating agents and / or branching agents (a-3) under reaction conditions which allow an polycondensation reaction to occur in which the constituents (a-1), (a-2) and (a-3) form a polycondensation product.

The polycondensation reaction may be carried out in accordance with any commonly known process. Typically, the constituents (a-1), (a-2) and (a-3) are mixed and heated to a temperature above the melting point of at least one of the constituents. Under stirring, the mixture is further heated to a temperature at which the condensation reaction between the carboxylic acids groups and the amine groups occurs and water is deliberated as by-product. The polycondensation reaction can also be carried out in the presence of at least one solvent, in particular water, to improve the processability and/or to initiate the condensation reaction. However, since water is also a by-product and can shift the reaction equilibrium of the condensation reaction to the side of the starting materials, the total amount of water in the reaction mixture has to be kept low, in particular towards the end of the reaction. Preferably, the water content at the end of the reaction is below 1 wt.-%, with respect to the total weight of copolyamide (A).

In one embodiment of the invention, the syntheses of the copolyamide (A) can be made in an autoclave equipped with a mechanical stirrer with an internal thermometer, able to go under pressure, typically up to 17.5 bars, and at high temperature of more than 220°C, in particular more than 250°C and typically at about 275°C.

### Preparation of the particulate polyamide composition (P)

The preparation of the particulate polyamide composition (P) includes several steps which are described in further detail in the following.

### Adjustment of the oligomer content in the copolyamide (A)

One aspect of the invention relates to a process for preparing a particulate polyamide composition (P), the process comprising at least one process step, wherein the first cyclic oligomers (ABc) derived from the repeating units of monomers (a-1) are extracted from the particulate copolyamide (A). The target specification is a particulate copolyamide (A) comprising ≤ 0.1 wt.-%, based on the total weight of the particulate copolyamide (A) of the first cyclic oligomers (ABc) derived from the repeating units of monomers (a-1).

In a preferred embodiment of this aspect of the invention, the extraction step employs at least one solvent selected from water, alcohols comprising 1 to 5 carbon atoms, caprolactame, and mixtures thereof. In a preferred embodiment, the solvent is selected from water, ethanol, caprolactame and mixtures thereof. Preferably, the extraction is carried out at increased temperatures, in particular at temperatures in the range of 0 to 15°C below the boiling point of the respective solvent or solvent mixture.

The extraction step can be carried out with the copolyamide (A) as obtained from the above described polycondensation reaction. Preferably, the extraction is carried out using the copolyamide in form of a particulate material, e.g. in form or granules obtained from the polycondensation reaction or for example in form of a powder having the mean particle diameter defined above. The extraction methods include, but are not limited to, all methods wherein the polyamide powder or the polyamide granules are contacted with a solvent which is miscible with the oligomers (ABc) to be extracted, followed by a step of separating the polyamide powder or the polyamide granules and solvent. Contacting is typically effected by suspending or dispersing the copolyamide (A) in the solvent. Suitable separation methods include filtering methods, in particular filter press, centrifuging methods, in particular pusher centrifuge, and decantation methods.

### Adjustment of the particle size of the copolyamide (A)

Before and/or after the extraction step, the copolyamide (A) typically has to be adjusted with respect to the particle size. This step is also referred to herein as micronization. After the above described polycondensation reaction, the copolyamide (A) is typically provided in form of polyamide granules having a particle size of about 2 to 3 mm. Thus, size reduction of the polyamide granules to a powder having a particle size in the range between 10 and 100 µm has to be effected. If, however, the copolyamide (A) already meets this specification, further adjustment is not necessary. The obtention of the polyamide (A) can be achieved by mechanical scratching of the polyamide granules at low temperatures (preferably < 30°C) in an impact mill, preferably in a contra-rotative mill. The minimum kinematic speed of the mill is preferably ≥ 200m/s. Separation of coarse fraction is preferably effected by plan or rotative sieving with a mesh of 100 µm or by air classifying. Separation can be carried out in a continuous process of the size reduction or not, and the coarse fraction can be add from 100 to 5% at the size reduction process.

### Additivation

In a further aspect, the present invention is concerned with a process for preparing a particulate polyamide composition (P), wherein the particulate polyamide composition (P) comprises at least one particulate copolyamide (A) and wherein the process comprises at least one step wherein the particulate copolyamide (A) is additivated with at least one additive (B) by using at least one solvent.

It is crucial for the application as polymer material in powder bed fusion methods to ensure that the entire particulate polyamide composition (P) has a homogeneous composition. In order to achieve this, the at least one additive (B) has to be evenly distributed the particulate polyamide composition (P) and the at least one additive (B) advantageously adheres to the surface of the particulate copolyamide (A). This is advantageously achieved by using at least one solvent, i.e. a solvent or a solvent mixture. Preferably, the at least one additive (B) is at least partially soluble in the solvent or solvent mixture. Suitable solvents include, but are not limited to, water and ethanol, preferably water.

This additivation method is particularly advantageous for the incorporation of the at least one heat stabilizer as adjuvant (b-1), in particular for the additivation with at least one hypophosphorous acid and/or salts thereof as previously described. It was observed by the present inventors, that the advantageous technical effects of these heat stabilizers are further improved if a uniform and stable coating of the surface of the particulate copolyamide (A) with the heat stabilizer is achieved.

Methods for applying at least one additive (B) to the particulate copolyamide (A) include:
(i) Preparation of a slurry of the additive (B) in the solvent and spray drying the slurry on the surface of the particulate copolyamide (A). Typically, a slurry in water comprising from 20 to 40 % w/w of solid are preferably used. Finally, the solvent is evaporated, preferably under vacuum or under an inert gas atmosphere (e.g. nitrogen) at an increased temperature, preferably at a temperature between 50°C and 100°C.
(ii) Preparing a mixture of the particulate copolyamide (A) and the additive (B) in particulate form under the addition of the solvent. The particulate additive (B) preferably have a mean particle diameter D₅₀ of 1 to 10 µm. Typically, water is used as solvent, preferably in a concentration between 0.5 and 10 wt.-%, based on the total mixture of the copolyamide (A) and the at least one additive (B). Finally, the solvent is evaporated, preferably under vacuum or under an inert gas atmosphere (e.g. nitrogen) at an increased temperature, preferably at a temperature between 50°C and 100°C.
(iii) Spraying of a mixture of components the copolyamide (A) and the at least one additive (B) dissolved or suspended in the solvent onto the surface of the particulate copolyamide (A), preferably under stirring. The mixture comprises preferably 0.5 to 12%w/w of the copolyamide (A) and the at least one additive (B). Finally, the solvent is evaporated, preferably under vacuum or under an inert gas atmosphere (e.g. nitrogen) at an increased temperature, preferably at a temperature between 50°C and 100°C.

In addition to the described solvent comprising additivation, certain additives (B), in particular additives (b-2) and (b-3) can be added in a separate, solvent-free process step. This is in particular true for drying agents, flowability agents (e.g. silica), and reinforcement fillers (e.g. glass fibres or glass beads) which are not intended to stick to the surface of the particulate copolyamide (A). These components may be mixed with the further components by any method known in the art. The skilled person can select the most appropriate method to achieve a homogeneous mixture.

### Dedusting of the particulate polyamide composition (P)

The process for preparing the particulate polyamide composition (P) according to the invention preferably further comprises a dedusting step in which undesirable small particles are removed from the particulate polyamide composition (P). In particular, the right quantity of thermal stabilizing agent and a low percentage of dust in the product was observed enhance powder flowability properties and avoid caking phenomena during the laser sintering process.

Dedusting may be achieved by any known method, e.g. using a dynamic classifier in order to obtain a mean particle diameter D₁₀ between 10 and 40µm, preferably between 15 and 35µm and most preferably between 20 and 30 µm.

### Drying of the particulate polyamide composition (P)

Finally, the thus obtained particulate polyamide composition (P) can be further subjected to a drying step, preferably under vacuum or an inert gas atmosphere (e.g. nitrogen) at a temperature between 50 and 100 °C to reduce the final moisture content, preferably below 1 wt.-% with respect to the total weight of the entire particulate polyamide composition (P).

Thus, the invention also relates to a process for preparing a particulate polyamide composition (P), the process comprising at least the following process steps:
a) Providing a copolyamide (A);
b) Adjusting the copolyamide (A) to a particulate material having a mean particle diameter D₅₀ between 10 µm and 100 µm;
c) Extracting the copolyamide (A) in order to reduce the amount of the first cyclic oligomers (ABc) derived from the repeating units of monomers (a-1) to an value of ≤ 0.1 wt.-%, based on the total weight of the particulate copolyamide (A);
d) Optionally additivation at least one additive (B) to the particulate copolyamide (A) in the presence of a solvent;
e) Optionally admixing at least one additive (B) to the particulate copolyamide (A) in the absence of a solvent;
f) Optionally dedusting of the obtained mixture in order to reduce the amount of undesirably small particles are removed from the particulate polyamide composition (P); and
g) Optionally drying of the particulate polyamide composition (P).

It has to be noted that the order of the process steps may be changed within the scope of this invention. In particular, process step c) may be carried out before or / and after process step b). Moreover, process step g) may be carried out repeatedly, optionally after every single other process steps. Process step d) is preferably carried out after process steps a), b) and c). Process step e) is preferably carried out after process step d). Process step f) is preferably carried out after process step d) and before process step e). Process step g) is preferably carried out as the final process step and can additionally be carried out after each of the previous process steps a) to f).

### Particulate polyamide composition (P) and applications

In a further aspect, the present invention relates to a particulate polyamide composition (P) obtained by a process as described above.

The particulate polyamide composition (P) according to the invention can advantageously be used in a powder bed fusion method, including selective laser sintering (SLS) methods and multi jet fusion (MJF) methods, to create three-dimensional articles.

In these applications, the particulate polyamide composition (P) is characterized by having a processing temperature window Δ T (Tₘ^{onset} - T_{c}^{onset}) of at least 15°C combined with a significantly reduced formation of dusts during the powder bed fusion methods even at high process temperature of more than 220°C.

In a further aspect, the invention relates to a process for preparing an article by powder bed fusion method / selective layer melting method employing a particulate polyamide composition (P) according to the invention.

In one embodiment of this aspect, this process includes a selective laser sintering (SLS) method. In an alternative embodiment, the process includes a multi jet fusion (MJF) method.

Selective laser sintering is preferably carried out. The surface of the build area is heated up to 220°C to 250°C. A laser with a power of 30W to 50W bring the remaining needed energy to melt the powder selectively.

Manufacturing by selective fusion of layers is a method for manufacturing articles that comprises laying down layers of materials in powder form, selectively melting a portion or a region of a layer, and laying down a new layer of powder, and again melting a portion of this layer, and so on, so as to give the desired object. The selectivity of the portion of the layer to be melted is obtained by means, for example, of the use of absorbers, inhibitors, or masks, or via the input of focused energy, as for example electromagnetic radiation such as a laser beam.

Preference is given in particular to sintering by addition of layers, especially rapid prototyping by sintering using a laser.

Rapid prototyping is a method for obtaining components in complex shapes without tooling and without machining, from a three-dimensional image of the article to be produced, by sintering superposed layers of powders by means of a laser. General aspects of rapid prototyping by laser sintering are referred to in patents U.S. Pat. No. 6,136,948 and in patent applications WO 96/06881 and US 2004/0138363.

Machines for carrying out these methods are composed of a construction chamber on a production piston, surrounded on the left and on the right by two pistons which supply the powder, a laser, and means for spreading the powder, such as a roller. The chamber is generally maintained at constant temperature to avoid deformations.

As an example, the powder is first spread in a uniform layer over the entire chamber, and the laser then traces the 2D cross section on the surface of the powder, thereby sintering it. Masks may also be used. The production piston drops by the thickness of one layer, while one of the powder feed pistons rises. A new layer of powder is spread over the whole surface, and the procedure is repeated until the component is finished. The component must then be withdrawn cautiously from the machine and cleaned to remove the unsintered powder surrounding it. There are other machines where the powder arrives not from the bottom, using pistons, but from the top. This method provides a time saving since there is no need to halt the manufacture of components in order to resupply the machine with powder.

Other methods of manufacture by addition of layers, such as those described in patents WO 01/38061 and EP 1 015 214, are also suitable. These two methods use infrared heating to melt the powder. The selectivity of the melted portions is obtained by the use of inhibitors in the case of the first method and by the use of a mask in the case of the second method. Another method is described in patent application DE 10 311 438. In this method, the energy for melting the polymer is provided by a microwave generator and the selectivity is obtained through the use of a "susceptor".

A further object of the invention is a three-dimensional article obtained by a process according to the process described above. The article in in particular characterized by having a good temperature stability due to the high melting point of the copolyamide (A). Moreover, only little warpage is observed during the process, if the inventive polyamide composition is used.

Other advantages and details of the invention will become apparent from the examples given below for illustrative purposes only.

### EXAMPLES

### General methods

The following general methods were used:

### Determination of the processing temperature window Δ T (Protocol P)

Melting temperatures, crystallization temperatures and glass transition temperatures were determined by differential scanning analysis (DSC; according to ISO 11357-3), according to the following protocol P:
1) Holding a copolyamide sample A) for 1 min at 25°C;
2) Heating the copolyamide sample A) from 25°C to 235°C at 10°C/min;
3) Holding the copolyamide sample A) for 0.33 min at 235°C;
4) Cooling the copolyamide sample A) from 235°C to 150°C at 10°C/min;
5) Holding the copolyamide sample A) for 5 min at 150°C;
6) Heating the copolyamide sample A) from 150°C to 300°C at 10°C/min;
7) Holding the copolyamide sample A) for 5 min at 300°C;
8) Cooling the copolyamide sample A) from 300°C to 25°C at 10°C/min;
9) Determining Δ T as the difference of temperature between onset of melting peak (Tₘ^{onset}) peak at step 6) and onset of crystallization peak (T_{c}^{onset}) at step 8).

For PA6 copolymers as comparative example, the temperatures of step 3) and 6) are decreased due to the lower melting points. For these copolymers, having a melting point below 220°C, following protocol P' has been applied (DSC; according to ISO 11357-3):
1) Holding a PA6 copolyamide sample for 1 min at 25°C;
2) Heating the PA6 copolyamide sample from 25°C to 190°C at 10°C/min;
3) Holding the PA6 copolyamide sample for 0.33 min at 190°C;
4) Cooling the PA6 copolyamide sample from 190°C to 100°C at 10°C/min;
5) Holding the PA6 copolyamide sample for 5 min at 100°C;
6) Heating the PA6 copolyamide sample from 100°C to 300°C at 10°C/min;
7) Holding the PA6 copolyamide sample for 5 min at 300°C;
8) Cooling the PA6 copolyamide sample from 300°C to 25°C at 10°C/min;
9) Determining Δ T as the difference of temperature between onset of melting (Tₘ^{onset}) peak at step 6) and onset of crystallization peak (T_{c}^{onset}) at step 8).

### Viscosity number

Viscosity number VN was determined in formic acid 90 wt.-% according to ISO 307.

### Carboxylic acid End-Groups (CEG) concentration and Amine End-Groups (AEG) concentration

CEG and AEG were determined as described in Nylon Plastics Handbook Edited by Melvin I. Kohan, (1995). CEG and AEG were here determined by potentiometric titration (unit: meq/kg).

### Polymerization experiments (Examples 1 to 12, Comparative Examples 13 to 15)

Different copolyamides were prepared as described in detail in Examples 1 to 12 and Comparative Examples 13, 14 and 15 below.

### Example 1: Production of a copolyamide PA6.6/IPDA.I according to the invention

86.673 kg (330.4 mol) of hexamethylenediamine adipate (nylon 66 salt), 2.965 kg (17.4 mol, i.e. 5 mol-%) of isophorone diamine and 2.895 kg (17.4 mol, i.e. 5 mol-%) of isophthalic acid were poured with 85.400 kg of demineralized water and antifoam agent in a stainless steel autoclave equipped with a mechanical stirrer with an internal thermometer. The autoclave atmosphere was purged with nitrogen, and the temperature was increased progressively to increase the pressure up to 1 bar, allowing to distillate water so as to reach a salt concentration of 70%. Then the salt solution was transferred to a second stainless steel autoclave equipped with a mechanical stirrer with an internal thermometer and the temperature was progressively increased up to 220°C, with continuous stirring, letting pressure increase up to about 17.5 bar. The temperature was increased progressively up to 250°C, while maintaining the same level of pressure. The pressure was then progressively released while the temperature was increased to about 275°C and kept for 55 min at the same temperature under continuous stirring. The pressure was built up with nitrogen and the polymer was extruded in a strand and pelletized.

A semi-crystalline polymer was obtained with the following analytical data:
Viscosity number (VN) was 127mL/g.
End-groups titrations were as follow: CEG = 73 meq/kg, AEG = 52 meq/kg.
Melting temperature was 252°C.
Δ T according to protocol P was 27°C.

### Example 2: Production of a copolyamide PA6.6/BAC.HIA according to the invention

86.673 kg (330.4 mol) of hexamethylenediamine adipate (nylon 66 salt), 2.472 kg (17.4 mol) of 1.3-cyclohexanebis(methylamine) and 3.166 kg (17.4 mol) of 5-hydroxy-isophthalic acid were poured with 85.400 kg of demineralized water and antifoam agent in a stainless steel autoclave and allow to polycondensate under pressure, similarly to example 1. The pressure was then progressively released while the temperature was increased to about 275°C and kept for 45 min at the same temperature under continuous stirring. The pressure was built up with nitrogen and the polymer was extruded in a strand and pelletized.

A semi-crystalline polymer was obtained with the following analytical data:
End-groups titrations were as follow: CEG = 66 meq/kg, AEG = 61 meq/kg.
Melting temperature was 256°C.
Processing temperature window Δ T according to protocol P was 25°C.

### Example 3: Production of a copolyamide PA6.6/IPDA.T according to the invention

Copolyamide PA6.6/IPDA.T was prepared according to the method described for the preparation of copolyamide PA6.6/IPDA.I (Example 1). 142.01g (0.541 mol) of hexamethylenediamine adipate (nylon 66 salt), 4.85 g (0.028 mol, i.e. 5 mol-%) of isophorone diamine and 4.73g (0.028 mol, i.e. 5 mol-%) of terephthalic acid were poured with 135 g of demineralized water and antifoam agent in a stainless steel autoclave equipped with a mechanical stirrer with an internal thermometer. The autoclave atmosphere was purged with nitrogen, and the temperature was increased progressively to increase the pressure up to 1 bar, allowing to distillate water so as to reach a salt concentration of 70%. Then the temperature was progressively increased up to 220°C, with continuous stirring, letting pressure increase up to about 17.5 bar. The temperature was increased progressively up to 250°C, while maintaining the same level of pressure. The pressure was then progressively released while the temperature was increased to about 272°C and kept for 30 min at the same temperature under continuous stirring. The pressure was built up with nitrogen and the polymer was extruded in a strand and pelletized.

A semi-crystalline polymer was obtained with the following analytical data:
End-groups titrations were as follow: CEG = 108 meq/kg, AEG = 42 meq/kg.
Processing temperature window Δ T according to protocol P was 18°C.

### Example 4: Production of a copolyamide PA6.6/BAC.I according to the invention

142.01g (0.541 mol) of hexamethylenediamine adipate (nylon 66 salt), 4.05 g (0.028 mol, i.e. 5 mol-%) of 1.3-cyclohexanebis(methylamine) and 4.73 g (0.028 mol, i.e. 5 mol-%) of isophthalic acid were poured with 135 g of demineralized water and antifoam agent in a stainless steel autoclave equipped with a mechanical stirrer with an internal thermometer. The autoclave atmosphere was purged with nitrogen, and the temperature was increased progressively to increase the pressure up to 1 bar, allowing to distillate water so as to reach a salt concentration of 70%. Then the temperature was progressively increased up to 220°C, with continuous stirring, letting pressure increase up to about 17.5 bar. The temperature was increased progressively up to 250°C, while maintaining the same level of pressure. The pressure was then progressively released while the temperature was increased to about 272°C and kept for 30 min at the same temperature under continuous stirring. The pressure was built up with nitrogen and the polymer was extruded in a strand and pelletized.

A semi-crystalline polymer was obtained with the following analytical data:
Viscosity number (VN) was 113 mL/g.
End-groups titrations were as follow: CEG = 108 meq/kg, AEG = 42 meq/kg.
Melting temperature was 255°C.
Processing temperature window Δ T according to protocol P was 25°C.

### Example 5: Production of a copolyamide PA6.6/6.I according to the invention

142.51 g (0.543 mol) of hexamethylenediamine adipate (nylon 66 salt), 3.32 g (0.029 mol) of hexamethylenediamine and 4.75 g (0.029 mol, i.e. 5 mol-%) of isophthalic acid were poured with 135 g of demineralized water and antifoam agent in a stainless steel autoclave and allow to polycondensate under pressure, similarly to example 3. The pressure was then progressively released while the temperature was increased to about 272°C and kept for 40 min at the same temperature under continuous stirring. The pressure was built up with nitrogen and the polymer was extruded in a strand and pelletized.

A semi-crystalline polymer was obtained with the following analytical data:
Viscosity number (VN) was 120 mL/g.
End-groups titrations were as follow: CEG = 85 meq/kg, AEG = 53 meq/kg.
Melting temperature was 250°C.
Processing temperature window Δ T according to protocol P was 18°C.

### Example 6: Production of a copolyamide PA6.6/6.AISNa according to the invention

142.51 g (0.543 mol) of hexamethylenediamine adipate (nylon 66 salt), 2.93 g (0.025 mol) of hexamethylenediamine and 6.75 g (0.025 mol, i.e. 4 mol-%) of 5-sodiosulfo isophthalic acid were poured with 135 g of demineralized water and antifoam agent in a stainless steel autoclave and allow to polycondensate under pressure, similarly to example 3. The pressure was then progressively released while the temperature was increased to about 272°C and kept for 30 min at the same temperature under continuous stirring. The pressure was built up with nitrogen and the polymer was extruded in a strand and pelletized.

A semi-crystalline polymer was obtained with the following analytical data:
End-groups titrations were as follow: CEG = 116 meq/kg, AEG = 59 meq/kg.
Melting temperature was 258°C.
Processing temperature window Δ T according to protocol P was 22°C

### Example 7: Production of a copolyamide PA6.6/6.AISNa according to the invention

142.51 g (0.543 mol) of hexamethylenediamine adipate (nylon 66 salt), 5,85 g (0.050 mol) of hexamethylenediamine and 13.50 g (0.050 mol, i.e. 8 mol-%) of 5-sodiosulfo isophthalic acid were poured with 135 g of demineralized water and antifoam agent in a stainless steel autoclave and allow to polycondensate under pressure, similarly to example 3. The pressure was then progressively released while the temperature was increased to about 272°C and kept for 30 min at the same temperature under continuous stirring. The pressure was built up with nitrogen and the polymer was extruded in a strand and pelletized.

A semi-crystalline polymer was obtained with the following analytical data:
End-groups titrations were as follow: CEG = 190 meq/kg, AEG = 114 meq/kg.
Melting temperature was 251 °C.
Processing temperature window Δ T according to protocol P was 34°C

### Example 8: Production of a copolyamide PA6.6/MACM.I according to the invention

142.01g (0.541 mol) of hexamethylenediamine adipate (nylon 66 salt), 6.79 g (0.028 mol, i.e. 5 mol-%) of 4,4' -Methylenebis(2-methylcyclohexylamine) and 4.73 g (0.028 mol, i.e. 5 mol-%) of isophthalic acid were poured with 135 g of demineralized water and antifoam agent in a stainless steel autoclave and allow to polycondensate under pressure, similarly to example 3. The pressure was then progressively released while the temperature was increased to about 272°C and kept for 30 min at the same temperature under continuous stirring. The pressure was built up with nitrogen and the polymer was extruded in a strand and pelletized.

A semi-crystalline polymer was obtained with the following analytical data:
End-groups titrations were as follow: CEG = 139 meq/kg, AEG = 33 meq/kg.
Melting temperature was 254°C.
Processing temperature window Δ T according to protocol P was 23°C.

### Example 9: Production of a copolyamide PA6.6/DCH.6 according to the invention

142.01g (0.541 mol) of hexamethylenediamine adipate (nylon 66 salt), 3.25 g (0.041 mol, i.e. 7 mol-%) of 1,2-diaminocyclohexane and 5.95 g (0.041 mol) of adipic acid were poured with 135 g of demineralized water, 0.015 g of 85% phosphoric acid solution and antifoam agent in a stainless steel autoclave and allow to polycondensate under pressure, similarly to example 3. The pressure was then progressively released while the temperature was increased to about 272°C and kept for 30 min at the same temperature under continuous stirring. The pressure was built up with nitrogen and the polymer was extruded in a strand and pelletized.

A semi-crystalline polymer was obtained with the following analytical data:
End-groups titrations were as follow: CEG = 72 meq/kg, AEG = 97 meq/kg.
Melting temperature was 258°C.
Processing temperature window Δ T according to protocol P was 21 °C.

### Example 10: Production of a copolyamide PA6.6/DCH.I according to the invention

142.01g (0.541 mol) of hexamethylenediamine adipate (nylon 66 salt), 3.25 g (0.028 mol, i.e. 5 mol-%) of 1,2-diaminocyclohexane and 4.73 g (0.028 mol, i.e. 5 mol-%) of isophthalic acid were poured with 135 g of demineralized water and antifoam agent in a stainless steel autoclave and allow to polycondensate under pressure, similarly to example 3. The pressure was then progressively released while the temperature was increased to about 272°C and kept for 30 min at the same temperature under continuous stirring. The pressure was built up with nitrogen and the polymer was extruded in a strand and pelletized.

A semi-crystalline polymer was obtained with the following analytical data:
Viscosity number (VN) was 77 mL/g.
End-groups titrations were as follow: CEG = 109 meq/kg, AEG = 112 meq/kg.
Melting temperature was 255°C.
Processing temperature window Δ T according to protocol P was 20°C.

### Example 11: Production of a copolyamide PA6.6/6.HIA according to the invention

142.01g (0.543 mol) of hexamethylenediamine adipate (nylon 66 salt), 3.31 g (0.028 mol) of hexamethylenediamine and 5.19 g (0.028 mol, i.e. 5 mol-%) of 5-hydroxyisophthalic acid were poured with 135 g of demineralized water and antifoam agent in a stainless steel autoclave and allow to polycondensate under pressure, similarly to example 3. The pressure was then progressively released while the temperature was increased to about 272°C and kept for 30 min at the same temperature under continuous stirring. The pressure was built up with nitrogen and the polymer was extruded in a strand and pelletized.

A semi-crystalline polymer was obtained with the following analytical data:
End-groups titrations were as follow: CEG = 79 meq/kg, AEG = 58 meq/kg.
Melting temperature was 259°C.
Processing temperature window Δ T according to protocol P was 15°C.

### Example 12: Production of a phosphorous containing copolyamide according to the invention

136 g (0.518 mol) of hexamethylenediamine adipate (nylon 66 salt), 4.88 g (0.042 mol) of hexamethylenediamine and 10.5 g (0.042 mol, i.e. 7 mol-%) of isobutylbis(2-carboxyethyl)phosphine oxide were poured with 139 g of demineralized water and antifoam agent in a stainless steel autoclave and allow to polycondensate under pressure, similarly to example 3. The pressure was then progressively released while the temperature was increased to about 272°C and kept for 30 min at the same temperature under continuous stirring. The pressure was built up with nitrogen and the polymer was extruded in a strand and pelletized.

A semi-crystalline polymer was obtained with the following analytical data:
End-groups titrations were as follow: CEG = 199 meq/kg, AEG = 16 meq/kg.
Viscosity number (VN) was 75 mL/g
Melting temperature was 256°C.
Processing temperature window Δ T according to protocol P was 20°C.

### Comparative example 13: Production of a PA6/IPDA.T

73.02 kg (0.6462 mol) of caprolactame, 3.82 kg (0.0225 mol) of isophorone diamine, 2.93 kg (0.0176 mol) of isophthalic acid and 0.12 kg (0.0004 mol) of stearic acid were poured with 34.00 kg of demineralized water and antifoam in a stainless steel clave equipped with a mechanical stirrer with an internal thermometer. The clave atmosphere was purged with nitrogen, and the temperature was increased progressively to increase the pressure up to 1 bar, allowing to demineralized water so as to reach a concentration of 80%. Then the solution was transferred to a second stainless steel clave equipped with a mechanical stirrer with an internal thermometer and the temperature was progressively increased up to 230°C, with continuous stirring, letting pressure increase up to about 17.5 bar. The temperature was increased progressively up to 245°C, while maintaining the same level of pressure. The pressure was then progressively released and decreased down to 500 mbar while the temperature was maintained to about 245°C under continuous stirring. The pressure was finally built up with nitrogen and the polymer was extruded in a strand and pelletized.

The PA6/IPDA.T according to example 13 is washed one time in hot water at 97°C with a solid / water weight ratio of 1/3. Then the pellets are dried and residual caprolactame oligomer content is 0.8 wt.-%.
Melting temperature was 212°C.
Processing temperature window Δ T according to protocol P' was 28°C.

### Comparative Example 14: Production of a PA6.6

91.241 kg (347,8 mol) of hexamethylenediamine adipate (nylon 66 salt) were poured with 85,400 kg of demineralized water and antifoam agent in a stainless steel autoclave and allow to polycondensate under pressure, similarly to example 1. The pressure was then progressively released while the temperature was increased to about 275°C and kept for 30 min at the same temperature under continuous stirring. The pressure was built up with nitrogen and the polymer was extruded in a strand and pelletized.

A semi-crystalline polymer was obtained with the following analytical data:
Viscosity number (VN) was 131 mL/g.
End-groups titrations were as follow: CEG = 78 meq/kg, AEG = 50 meq/kg.
Melting temperature was 264°C.
Processing temperature window Δ T according to protocol P was 13°C.

### Comparative Example 15: Production of PA66

A polyamide 66 (PA66), obtained from hexamethylenediamine adipate (nylon 66 salt, AB), was used. The PA66 was washed according to the following procedure, resulting in a PA66 having a residual oligomer content of 0.1 wt.-%. :
1. start from a fabric of PA66 coated with silicone (residual amount of cyclic dimers ABc = 0.4 wt.-%, amount of cyclic tetramers ABABc = 0.49 wt.-%);
2. size reduction in several step to obtain a short fiber of PA66 with a mean particle size between 15 and 20 mm;
3. washing with caustic soda 7% w/w in water at 50°C during 45 minutes with a ratio of 7 mol of PA66 particles for 100 mol of caustic soda;
4. neutralization by acid at pH 9 and separation of the PA66 and silicon;
5. washing of polyamide fiber in one step with decarbonated water (pH=9) during 10 minutes with a concentration of PA66 fiber in water of 2.2% w/w;
6. separation of fiber and water, drying, compacting
7. final PA66 obtained has the following characteristics:
   Viscosity number (VN) was 160 mL/g;
   End-groups titrations were as follow: CEG = 61 meq/kg, AEG = 34,4 meq/kg.
   Residual amount of cyclic dimers (ABc) was 0.1 wt.-%.
   Processing temperature window Δ T according to protocol P was 13°C.

### Particle Size Adjustment (Micronization and Particle Size measurement)

The obtained copolyamides are further brought to the form of particles by the micronization processes described below in Examples 16, 17 and Comparative Examples 18 to 20. Size reduction of the thermoplastic granule from 2 to 3 mm to powder below 100 µm was typically achieved by grinding in a contra-rotative pin mill.

The particle size was measured by laser diffraction on a Malvern Mastersizer 3000 apparatus, with dry dispersion, according to standard ISO 13320-1.

### Example 16: Micronization of a copolyamide PA6.6/IPDA.I according to the invention

100 kg of 3 mm granules of PA6.6/IPDA.I polymer from example 1 were ground in order to produce a powder below 100 µm. The grinding equipment used was a contra-rotative pin mill. In order to reach the target particle size distribution, the mill speed was set to 8800 x 2 rpm and the product was cooled down with liquid nitrogen to help the physical phenomenon of mechanical scratching which is responsible of the downsizing process. The temperature of the product at the mill discharge was -60°C.

The particle size reached after the grinding step was: D₁₀ = 29 µm, D₅₀ = 98 µm, D₉₀ = 237 µm.

The obtained powder was subsequently sieved to separate the product from the coarse fraction. An air jet sieve equipped with a 100 µm mesh was used for this purpose.

The particle size of the final product was: D₁₀ = 19 µm, D₅₀ = 54 µm, D₉₀ = 104 µm.

The total yield of the process was 36.3%.

### Example 17: Micronization of a copolyamide PA66/BAC.HIA according to the invention

120 kg of 3 mm granules of copolyamide PA66/BAC.HIA from example 2 were ground in order to produce a powder below 100 µm. The grinding equipment used was a contra-rotative pin mill. In order to reach the target, the mill speed was set to 8800 x 2 rpm and the product was cooled down with liquid nitrogen to help the physical phenomenon of mechanical scratching which is responsible of the downsizing process. The temperature of the product at the mill discharge was -60°C.

The particle size reached after the grinding step was: D₁₀ = 31 µm, D₅₀ = 95 µm, D₉₀ = 233 µm.

The obtained powder was subsequently sieved to separate the product from the coarse fraction. An air jet sieve equipped with a 100 µm mesh was used for this purpose.

The particle size of the final product was: D₁₀ = 24 µm, D₅₀ = 65 µm, D₉₀ = 120 µm.

The total yield of the process was 35%.

### Comparative Example 18: Micronization of a copolyamide PA6/IPDA.T

300 kg of 3 mm granules of copolyamide PA6/IPDA.T from example 13 were ground in order to produce a powder below 100 µm. The grinding equipment used was a contra-rotative pin mill. In order to reach the target, the mill speed was set to 8800 x 2 rpm and the product was cooled down with liquid nitrogen to help the physical phenomenon of mechanical scratching which is responsible of the downsizing process. The temperature of the product at the mill discharge was -60°C.

The obtained powder was subsequently sieved to separate the product from the coarse fraction. An air jet sieve equipped with a 100 µm mesh was used for this purpose.

The particle size of the final product was: D₁₀ = 20.2 µm, D₅₀ = 52.4 µm, D₉₀ = 100 µm.

The total yield of the process was 63.5%.

### Comparative Example 19: Micronization of a polyamide PA66

300 kg of 3 mm PA66 granules according to comparative example 14 were ground in order to produce a powder below 100 µm. The grinding equipment used was a contra-rotative pin mill. In order to reach the target particle size distribution, the mill speed was set to 8800 x 2 rpm and the product was cooled down with liquid nitrogen to help the physical phenomenon of mechanical scratching which is responsible of the downsizing process. The temperature of the product at the mill discharge was -60°C.

The particle size reached after the grinding step was: D₁₀ = 28 µm, D₅₀ = 85 µm, D₉₀ = 195 µm.

The obtained powder was subsequently sieved to separate the product from the coarse fraction. An air jet sieve equipped with a 100 µm mesh was used for this purpose.

The particle size of the final product was: D₁₀ = 22 µm, D₅₀ = 58 µm, D₉₀ = 110 µm.

The total yield of the process was 52%.

### Comparative Example 20: Micronization of a washed polyamide PA66

300 kg of 3 mm PA66 polymer according to comparative example 15 granules were ground in order to produce a powder below 100 µm. The grinding equipment used was a contra-rotative pin mill. In order to reach the target particle size distribution, the mill speed was set to 8800 x 2 rpm and the product was cooled down with liquid nitrogen to help the physical phenomenon of mechanical scratching which is responsible of the downsizing process. The temperature of the product at the mill discharge was -60°C.

The obtained powder was subsequently sieved to separate the product from the coarse fraction. An air jet sieve equipped with a 100 µm mesh was used for this purpose.

The particle size of the final product was: D₁₀ = 20.14 µm, D₅₀ = 46.45 µm, D₉₀ = 95.13 µm.

The total yield of the process was 45.5%.

### Oligomer (ABc) Extraction and determination of residual oligomer

The following washing equipment was used for the oligomer (ABc) extraction:
(i) washing:double jacket reactor with agitation helix three blade and bottom turbine (Valorel 250L Inox 316L)
(ii) solid-liquid separation: drying filter 3V Cogeim HC22, filtration surface 0.19m² and efficient volume 42L. filter in Hastelloy, porosity 30 µm.
(iii) drying: in drying filter

### Experimental Protocol for the oligomer (ABc) extraction:

### Extraction Method A (two washing steps):

22 kg of the polyamide was loaded in the reactor through the Pouyes ring. The reactor was purged twice with nitrogen. Then 136.4 kg of ethanol were added and the mixture was stirred at 120 rpm while heating to 78°C. The mixture was stirred at this temperature for 2 h. Then, the mixture was cooled down to 25°C and stirring was stopped. The mixture was allowed to settle for 16 h. The oligomer (ABc) containing liquid (about 115 L) was pumped of. The reactor comprising the solid from the first washing step was loaded with 95.4 kg of fresh ethanol. The mixture was stirred at 120 rpm while heating to 78°C. The mixture was stirred at this temperature for 2 h. Then, the mixture was cooled down to 25°C and transferred to a drying filter. The cake was washed with 18 kg of ethanol. The solid was dried under agitation at 60°C with low pressure during 24h. The product was stored in sealed bags.

### Extraction Method B (one washing steps):

22 kg of the polyamide was loaded in the reactor through the Pouyes ring. The reactor was purged twice with nitrogen. Then 136.4 kg of ethanol were added and the mixture was stirred at 120 rpm while heating to 78°C. The mixture was stirred at this temperature for 2 h. Then, the mixture was cooled down to 25°C and transferred to a drying filter. The cake was washed with 18 kg of ethanol. The solid was dried under agitation at 60°C with low pressure during 24h. The product was stored in sealed bags.

### Determination of the content of cyclic oligomer (ABc)

The polyamide is cryo-grinded to achieve particle size between 100 µm and 200 µm.

Then oligomers are extracted in methanol with automate solid/liquid extractor DIONEX ASE 200 (Accelerated Solvent Extractor). For this extraction 2.5g polyamide are placed in a cellulose thimble completed with sand. The thimble is placed in a 11 mL cell. Two successive extractions of three cycles are performed, at 70 bars and 90°C.

The solvent containing oligomers are placed in 250 mL flask and completed with methanol.

The solutions obtained are filtered in PTFE 0.45 µm filter, and then analyzed by HPLC.

HPLC was performed in a reverse-method based on acetonitrile/water gradient as solvent using an Inertsil ODS3 column (3 µm 100 x 4.6 mm), a UV detection at 210 nm, a temperature of 35°C, an injected volume of 10 µL and a flow rate of 0.8 mL/min.

Oligomer standards are used to quantify.

After oligomer (ABc) extraction, the remaining content of oligomers (ABc) in the polyamide is determined as follows:

| **Ex. No.** | **Polyamide A** | **Extraction Method** | **Residual oligomer (ABc) [wt.-%]** |
|---|---|---|---|
| **Ex. 21** | PA6.6/IPDA.I (according to Ex. 16) | **Method A** | 0.01 |
| **Ex. 22** | PA6.6/IPDA.I (according to Ex. 16) | **Method B** | 0.03 |
| **Ex. 23** | PA66/BAC.HIA (according to Ex. 17) | **Method A** | 0.01 |
| **Comp. Ex. 24** | PA6.6 (according to Comp. Ex. 19) | **Method A** | 0.01 |

### Additivation and dedusting

### Example 25: additivation of copolyamide PA66/IPDA.I powder

### a) Additivation with stabilizing agent

30.93 kg of copolyamide powder PA6.6/IPDA.I from example 21 were spray-dried to add manganese hypophosphite to the product. To do so, a mixture of 0.80 kg manganese hypophosphite and water was prepared. Then the polymer powder was mixed to the manganese hypophosphite solution; the total percentage of solid compound in the water was 33 wt.-%.

The mixture was then sprayed in a chamber using a turbine. Therein, the product was dried with the help of a co-current throughput of 160°C hot air of about 950 Nm³/h. The mixture of air and dried product was separated using a cyclone.

The productivity rate was about 7 kg/h. The total yield of the operation is about 95%.

### b) Dedusting

28.6 kg of PA6.6/IPDA.I powder obtained in step a) above were dedusted in order to eliminate the excessive amount of manganese hypophosphite, previously added, and fine particles. The dedusting was conducted using a dynamic classifier with the target of obtaining a particle size distribution D₁₀ between 25 µm and 35 µm. The classifier wheel was set to 6000 rpm. The air flows which conveys the powder in the classifier was regulated respectively to 400 m³/h and 600 m³/h. The material throughput during the whole test was about 120-130 kg/h.

The feed product had the following granulometry: D₁₀ = 24.74 µm, D₅₀ = 57.27 µm, D₉₀ = 96.32 µm; after the test, the granulometry shifted to the following values: D₁₀ = 27.94 µm, D₅₀ = 58.75 µm, D₉₀ = 99.99 µm. The fines collected - 2.5 kg - were characterized as: D₁₀ = 9.09 µm, D₅₀ = 19.6 µm, D₉₀ = 35.7 µm.

### c) Drying and additivation with flowability agent

26.2 kg of PA6.6/IPDA.I powder obtained in the dedusting step b) were dried in order to reach moisture specifications for the laser sintering technology. In the meanwhile, silica was added and mixed to the product to enhance flowability properties of the powder. To do so, PA6.6/IPDA.I polyamide was introduced in a vacuum drier equipped with a cooling and a heating jacket. 0.082 kg of silica were added and mixed for 30 minutes at atmospheric temperature; to ensure a proper mixing, an endless screw mounted on a rotating arm was used. Then, after nitrogen blanketing, the product was put under full vacuum (14-15 mbar) and heated up using diathermic oil as a heating agent. The temperature was slowly increased to 79.1 °C. After 3 h and 20 min from the beginning of the process, the product reached a moisture content of about 0.05 - 0.07 wt.-% which is in line with the specifications. The drier was cooled down to atmospheric temperature, the pressure was rebuilt to ambient pressure using a nitrogen spillage and the product was discharged.

Using a vibrating sieve equipped with a 180 µm mesh, the product was screened in order to cut agglomerates which could have been formed during the drying step. Less than 0.5 kg of the product were lost during the whole process.

### Example 26: additivation of copolyamide PA66/IPDA.I powder

### a) Additivation with stabilizing agent and drying

30.13 kg of copolyamide powder PA6.6/IPDA.I according to example 21 were dried to reach moisture specifications for the laser sintering technology. In the meanwhile, manganese hypophosphite were added and mixed to the product to enhance flowability properties of the powder and prevent its yellowing. To do so, copolyamide PA6.6 was introduced in a vacuum drier equipped with a cooling and a heating jacket. 0.406 kg of sodium hypophosphite were added to the polyamide powder and the mixture was sprayed with 0.92 kg water to solubilize the hypophosphite and improve its dispersion on the surface of PA6.6 particles. The blend was mixed for 30 minutes at atmospheric temperature. To ensure a proper mixing, an endless screw mounted on a rotating arm was used. Then, after nitrogen blanketing, the product was put under full vacuum (14-15 mbar) and heated up using diathermic oil as a heating agent. The temperature slowly increased to 66.4°C. After 4h 40min from the beginning of the process, the product reached a moisture content of about 0.14 to 0.15 wt.-% which is in line with the specifications. No dedusting step was carried out.

### b) Addition of flowability agent

The drier was cooled down to atmospheric temperature. The pressure was rebuilt to atmospheric pressure using a nitrogen spillage. 0.111 kg of silica were added and mixed for 30 minutes at atmospheric temperature, then, the product was discharged. Using a vibrating sieve equipped with a 180 µm mesh, the product was screened in order to cut agglomerates which could have been formed during the drying step. Less than 0.5 kg of the product were lost during the whole process.

### Example 27: additivation of copolyamide PA66/IPDA.I powder

Additivation, dedusting and drying including silica addition was made according to example 25, using PA6.6/IPDA.T according to example 22 as copolyamide and manganese hypophosphite as thermal stabilizing agent.

### Example 28: additivation of copolyamide PA66/BAC.HIA powder

Additivation, dedusting and drying including silica addition was made according to example 25, using PA66/BAC.HIA according to example 23 as copolyamide and manganese hypophosphite as thermal stabilizing agent.

### Comparative Example 29: additivation of copolyamide PA6/IPDA.T powder

### a) Additivation with stabilizing agent and drying

1000 kg of polyamide powder PA6/IPDA.T according to comparative example 18 were dried to reach moisture specifications for the laser sintering technology. In the meanwhile, manganese hypophosphite was added and mixed to the product. To do so, the polyamide was introduced in a vacuum drier equipped with a cooling and a heating jacket. 13.48 kg of sodium hypophosphite were added to the polyamide powder and the mixture was sprayed with 30.48 kg water to solubilize the hypophosphite and improve its dispersion on the surface of polyamide particles. The blend was mixed for 30 minutes at atmospheric temperature. To ensure a proper mixing, an endless screw mounted on a rotating arm was used. Then, after nitrogen blanketing, the product was put under full vacuum (14-15 mbar) and heated up using diathermic oil as a heating agent. The temperature slowly increased to about 70°C. After 4 hours from the beginning of the process, the product reached a moisture content of about 0.10-0.15 wt.-% which is in line with the specifications. No dedusting step was carried out.

### b) Addition of flowability agent

The drier was cooled down to atmospheric temperature. The pressure was rebuilt to atmospheric pressure using a nitrogen spillage. 2.686 kg of silica were added and mixed for 30 minutes at atmospheric temperature, then, the product was discharged. Using a vibrating sieve equipped with a 180µm mesh, the product was screened in order to cut agglomerates which could have been formed during the drying step.

### Comparative Example 30: additivation of copolyamide PA6/IPDA.T powder

### a) Additivation with thermal stabilizing agent

78.5 kg of copolyamide powder PA6/IPDA.T according to comparative example 18 were spray-dried to add manganese hypophosphite to the product. To do so, a mixture of 2.10 kg manganese hypophosphite and water was prepared. Then the polymer powder was mixed to the manganese hypophosphite solution; the total percentage of solid compound in the water was 33 %.

The mixture was then sprayed in a chamber using a turbine. Therein, the product was dried with the help of a co-current throughput of 160°C hot air of about 950 Nm3/h. The mixture of air and dried product is separated using a cyclone. The productivity rate was about 7 kg/h; the total yield of the operation is about 95 wt.-%.

### b) Dedusting

The powder obtained in step a) was subsequently dedusted in order to eliminate the excessive amount of Manganese Hypophosphite, previously added, and fine particles. The dedusting was conducted using a dynamic classifier with the target of obtaining a D₁₀ between 25 µm and 35µm. The classifier wheel was set to 6000 rpm. The air flows which conveys the powder in the classifier was regulated respectively to 400 m³/h and 600 m³/h. The material throughput during the whole test was about 120-130 kg/h.

The feed product had the following granulometry: D₁₀ = 21.79 µm, D₅₀ = 50.59 µm, D₉₀ = 82.21 µm; after the dedusting step, the granulometry shifted to the following values: D₁₀ = 26.11 µm, D₅₀ = 51.58 µm, D₉₀ = 82.3µm. The fines collected were characterized as: D₁₀ = 7.52 µm, D₅₀ = 18.1 µm, D₉₀ = 33.31 µm.

### c) Drying and additivation with flowing agent

79.247 kg of polyamide powder composition obtained in step b) was subsequently dried in order to reach moisture specifications for the laser sintering technology. In the meanwhile, silica was added and mixed to the product to enhance flowability properties of the powder. To do so, the polymer powder composition obtained in step b) was introduced in a vacuum drier equipped with a cooling and a heating jacket. 0.247 kg of silica were added and mixed for 30 minutes at atmospheric temperature; to ensure a proper mixing, an endless screw mounted on a rotating arm was used. Then, after nitrogen blanketing, the product was put under full vacuum (14-15 mbar) and heated up using diathermic oil as a heating agent. The temperature slowly increased above 70°C. After more than 3h from the beginning of the process, the product reached a moisture content below 0.20 wt.-% which is in line with the specifications; The drier was cooled down to atmospheric temperature, the pressure was rebuilt to atmospheric pressure using a nitrogen spillage and the product was discharged. Using a vibrating sieve equipped with a 180 µm mesh, the product was screened in order to cut agglomerates which could have been formed during the drying step.

### Comparative Example 31: additivation of PA66 powder

### a) Additivation with thermal stabilizing agent

39.13 kg of polyamide powder PA6.6 according to comparative example 24 were spray-dried to add manganese hypophosphite to the product. To do so, a mixture of 1.04 kg manganese hypophosphite and water was prepared. Then the polymer powder was mixed to the manganese hypophosphite solution; the total percentage of solid compound in the water was 33 %. The mixture was then sprayed in a chamber using a turbine. Therein, the product was dried with the help of a co-current throughput of 160°C hot air of about 950 Nm³/h. The mixture of air and dried product was separated using a cyclone. The productivity rate was about 8 kg/h; the total yield of the operation is about 93 wt.-%.

### b) Dedusting

The spray-dried powder (36.7 kg of PA6.6 powder) was dedusted in order to eliminate the excessive amount of manganese hypophosphite, previously added, and fine particles. The dedusting was conducted using a dynamic classifier with the target of obtaining a particle size distribution D₁₀ between 15 µm and 35 µm. The classifier wheel was set to 6000 rpm. The air flows which conveys the powder in the classifier was regulated respectively to 400 m³/h and 600 m³/h. The material throughput during the whole test was about 120-130 kg/h.

The feed product had the following granulometry: D₁₀ = 26.48 µm, D₅₀ = 58.77 µm,
D₉₀ = 96.57 µm; after the test, the granulometry shifted to the following values: D₁₀ = 30.16 µm, D₅₀ = 62.72 µm, D₉₀ = 105.17 µm. The fines collected - 2.85 kg - were characterized as: D₁₀ = 9.25 µm, D₅₀ = 20.66 µm, D₉₀ = 39.08 µm.

### c) Drying and additivation with flowing agent

33.9 kg of PA66 powder were dried in order to reach moisture specifications for the laser sintering technology. In the meanwhile, Silica is added and mixed to the product to enhance flowability properties of the powder. To do so, PA6.6 polymer was introduced in a vacuum drier equipped with a cooling and a heating jacket. 0.106 kg of Silica were added and mixed for 30 minutes at atmospheric temperature; to ensure a proper mixing, an endless screw mounted on a rotating arm was used. Then, after nitrogen blanketing, the product was put under full vacuum (15-16 mbar) and heated up using diathermic oil as a heating agent. The temperature was slowly increased to 65.1°C. After 3h 20min from the beginning of the process, the product reached a moisture content of about 0.07 to 0.09 wt.-% which is in line with the specifications. The drier was cooled down to atmospheric temperature, the pressure was rebuilt to ambient pressure using a nitrogen spillage and the product was discharged.

Using a vibrating sieve equipped with a 180 µm mesh, the product was screened in order to cut agglomerates which could have been formed during the drying step. Less than 0.5 kg of product were lost during the whole process.

### Comparative Example 32: additivation of PA66 powder

### a) Additivation with thermal stabilizing agent and drying

38.2 kg of PA66 powder according to comparative example 20 were dried to reach moisture specifications for the laser sintering technology. In the meanwhile, manganese hypophosphite was added and mixed to the product. To do so, polymer was introduced in a vacuum drier equipped with a cooling and a heating jacket. 0.516 kg of manganese hypophosphite was added to the polyamide powder and the mixture was sprayed with 1.17 kg water to solubilize the hypophosphite and improve its dispersion on the surface of polyamide particles. The blend was mixed for 30 minutes at atmospheric temperature. To ensure a proper mixing, an endless screw mounted on a rotating arm was used. Then, after nitrogen blanketing, the product was put under full vacuum (14-15 mbar) and heated up using diathermic oil as a heating agent. The temperature slowly increased to 60.8°C. After 4h 25min from the beginning of the process, the product reached a moisture content of about 0.11 to 0.14 wt.-% which is in line with the specifications. The drier was cooled down to atmospheric temperature. The pressure was rebuilt to atmospheric pressure using a nitrogen spillage;

### b) Additivation with flowing agent

0.103 kg of silica were added to the polyamide powder obtained in process step a) and mixed for 30 minutes at atmospheric temperature. Then, the product was discharged. Using a vibrating sieve equipped with a 180 µm mesh, the product was screened in order to cut agglomerates which could have been formed during the drying step. Less than 1.5 kg of product were lost during the whole process.

### Comparative Example 33: additivation of PA66 powder

### a) Additivation with thermal stabilizing agent and drying

65.6 kg of PA66 powder according to comparative example 20 were dried to reach moisture specifications for the laser sintering technology. In the meanwhile, manganese hypophosphite was added and mixed to the product. To do so, polymer was introduced in a vacuum drier equipped with a cooling and a heating jacket. 0.884 kg of manganese hypophosphite was added to the polyamide powder and the mixture was sprayed with 4 kg water to solubilize the hypophosphite and improve its dispersion on the surface of polyamide particles. The blend was mixed for 30 minutes at atmospheric temperature; to ensure a proper mixing, an endless screw mounted on a rotating arm was used. Then, after nitrogen blanketing, the product was put under full vacuum (14-15 mbar) and heated up using diathermic oil as a heating agent. The temperature slowly increased to 60.6°C. After 6h 35min from the beginning of the process, the product reached a moisture content of about 0.09 to 0.11 wt.-% which is in line with the specifications. The drier was cooled down to atmospheric temperature, the pressure was rebuilt to atmospheric pressure using a nitrogen spillage

### b) Additivation with flowing agent

0.176 kg of silica were added and mixed for 30 minutes at atmospheric temperature, then, the product was discharged. Using a vibrating sieve equipped with a 180 µm mesh, the product was screened in order to cut agglomerates which could have been formed during the drying step. Less than 1.5 kg of product were lost during the whole process.

### Selective Laser Sintering (SLS)

Selective Laser Sintering (SLS) trails have been performed using the particulate polyamide compositions (P) obtained according to Examples 25 to 28 as well as Comparative Examples 29 to 33.

The SLS trials have been performed on a Selective Laser Sintering machine DTM2500 machine from 3D systems, upgraded for PA6 and PA66 processing. Powder was fed in 2 tanks adjacent to the build surface. The powder in the feed tanks was heated at the surface at a temperature of 150°C. The powder was then brought to the build surface via a roll to form a layer having a thickness of 100 to 150 µm. The surface of the build area is heated up to 220°C to 250°C. A laser with a power of 30 W to 50 W brought the remaining needed energy to melt the powder selectively.

Once the first layer was melted, the build surface was moved down and the roll deposits a second layer of powder at the build surface. The process was repeated until the final article was obtained.

After the production, the inside surface of the machine of the machine was observed, and particularly the surface of the laser lens. The laser lens should be clean of any dust to ensure a good functioning of the laser.

Warpage was determined by measurement of flatness of bars according to ISO 527 measured by means of a comparator. The bars were produced horizontally in the SLS machine, flat wise, meaning that the direction of the biggest length was parallel to the layers of powders. For the measurement with comparator, the bar is placed horizontally and flat wise on a table, the heads of the bars in contact with the table. If the bar is warped, the shape of the bar will be bended and the banana shape causes a distance between the part and the table at the middle of the bar. The distance between the table and the top middle of the specimen should not exceed the value of the thickness + 1 mm, meaning that warpage is acceptable if the distance between the table and the middle of the specimen is below or equal to 1 mm, and not acceptable if this distance exceeds 1 mm. In some cases warpage is so important that occurs during SLS production, causing an extraction of the part being printed out of the laser working area. In this case the production is damaged and the warpage is considered as not acceptable.

The results of the SLS trials are summarized in the following Table 1.

**Table 1. Results of the SLS trials.**

| Ex. No. | Polyamide (A) | Content of residual oligomer (ABc) [wt.-%] | Heat Stabilizing Additive | Δ T [°C] | Dust in SLS machine after production | Warpage |
|---|---|---|---|---|---|---|
| Ex. 25 | PA66/IPDA.I (Ex. 1) | 0.01 | Mn(PH₂O₂)₂ | 27 | No dusts | acceptable |
| Ex. 26 | PA66/IPDA.I (Ex. 1) | 0.01 | Na(PH₂O₂) | 27 | No dusts | acceptable |
| Ex. 27 | PA66/IPDA.I (Ex. 1) | 0.03 | Mn(PH₂O₂)₂ | 27 | No dusts | acceptable |
| Ex. 28 | PA66/BAC.HIA (Ex. 2) | 0.01 | Mn(PH₂O₂)₂ | 25 | No dusts | acceptable |
| Comp. Ex. 29 | PA6/IPDA/T (Comp. Ex. 13) | 0.8 | Na(PH₂O₂) | 28 | No dusts | acceptable |
| Comp. Ex. 30 | PA6/IPDA/T (Comp. Ex. 13) | 0.8 | Mn(PH₂O₂)₂ | 28 | No dusts | acceptable |
| Comp. Ex. 31 | PA66 (Comp. Ex. 14) | 0.01 | Mn(PH₂O₂)₂ | 13 | No dusts | acceptable |
| Comp. Ex. 19 | PA66 (Comp. Ex. 14) | 0.7 | --- | 13 | Dusts | acceptable |
| Comp. Ex. 32 | PA66 (Comp. Ex. 15) | 0.1 | Mn(PH₂O₂)₂ | 13 | Dusts | acceptable |
| Comp. Ex. 33 | PA66 (Comp. Ex. 15) | 0.1 | Mn(PH₂O₂)₂ | 13 | Dusts | acceptable |

### Discussion of the Results

After the production of SLS samples, the interior surface of the SLS machine, and in particular the surface of the laser lens, was examined. For Examples 25, 26, 27, and 28 no significant amount of dusts was observed on the surfaces.

For Comparative Example 31, the surface of laser lens was also considered as clean.

However for Comparative Examples 32 and 33 the content of residual oligomer (ABc) in the polyamide composition was too high for the production. The production was stopped before end due to deviation between laser power delivered and expected laser power. Also, due to bad regulation of temperature caused by defects of temperature sensor caused by the presence of dust, the entire polyamide powder was molten. The process was not selective anymore after 30 min of production.

For Comparative Examples 29 and 30, it was observed that the presence of residual oligomers (ABc) does not cause issues of dust at laser lens surface and temperature sensors if the particulate polyamide composition (P) has a melting point below 220°C.

Regarding SLS processing temperature window Δ T, Examples 25, 26, 27, and 28 and Comparative Examples 29 and 30 show that the SLS process is successful, if Δ T (Tm- Tc), determined according to protocol P and P' respectively, is ≥ 20°C. On the contrary, Comparative Examples 31, 32, 33 and 19 show that for polymers with processing temperature window Δ T (Tₘ^{onset} - T_{c}^{onset}) below 20°C, the SLS process is not possible because there the process temperature window is too small. Instead, caking of powder bed and parts curl in the same time those previous cases was observed. Caking of the powder means that the powder bed is melted without selectivity because temperature is too close to melting point. Curl means that the articles obtained show a banana shape due to fast crystallization, which is caused by a melting temperature which is too close to crystallization temperature.

## Claims

1. Particulate polyamide composition (P), comprising :
(A) 50 to 100 wt.-%, based on the total weight of the particulate polyamide composition (P), of at least one particulate copolyamide (A) obtainable by polycondensation of a monomer mixture comprising at least the following monomers (a-1), (a-2) and optionally component (a-3):
(a-1) 85 to 98 mol-%, based on the total monomer composition comprising the monomers (a-1), (a-2) and optionally (a-3), of at least one aliphatic carboxylic diacid (a-1.1) and at least one aliphatic diamine (a-1.2) or/and at least one salt thereof (a-1.3);
(a-2) 2 to 15 mol-%, based on the total monomer composition comprising the monomers (a-1), (a-2) and optionally (a-3), of at least one comonomer, which is different from the monomers (a-1) and which is able to undergo a polycondensation reaction with the monomers (a-1), wherein at least one of those comonomers is selected from the group of aromatic carboxylic diacids (a-2.1.1), aromatic diamines (a-2.1.2), cycloaliphatic carboxylic diacids (a-2.2.1), cycloaliphatic diamines (a-2.2.2), phosphorated carboxylic diacids (a-2.3.1) and / or phosphorated diamines (a-2.3.2), or at least one salt (a-2.4) thereof; and
(a-3) 0 to 10 mol-%, based on the total monomer composition comprising the monomers (a-1), (a-2) and optionally (a-3), of at least one chain regulating agent (a-3.1) and / or branching agent (a-3.2);
(B) 0 to 50 wt.-%, based on the total weight of the particulate polyamide composition (P), of at least one additive (B);
wherein the amount of the first cyclic oligomer (ABc) derived from the repeating units of monomers (a-1) is below or equal to 0.1 wt.-%, based on the total weight of the particulate copolyamide (A);
and wherein the particulate copolyamide (A) has a mean particle diameter D₅₀ between 10 µm and 100 µm.

2. Particulate polyamide composition (P) according to claim 1, wherein the at least aliphatic carboxylic diacid (a-1.1), at least one aliphatic diamine (a-1.2) or/and at least one salt thereof (a-1.3) is selected from at least one aliphatic carboxylic diacid comprising 3 to 10 carbon atoms, preferably 4 to 8 carbon atoms, and at least one aliphatic diamine comprising 3 to 10 carbon atoms, preferably 4 to 8 carbon atoms, as well as the salts thereof.

3. Particulate polyamide composition (P) according to claim 1 or 2, wherein the at least one comonomer (a-2) is at least one selected from the group consisting of aromatic carboxylic diacids (a-2.1.1) and cycloaliphatic diamines (a-2.2.2).

4. Particulate polyamide composition (P) according to any of claims 1 to 3, wherein the additive (B) comprises at least one heat stabilizers including a hypophosphite salt.

5. Particulate polyamide composition (P) according to any of claims 1 to 4, wherein the wherein the particulate polyamide composition (P) has a peak melting point between 220°C and 300°C

6. Particulate polyamide composition (P) according to any of claims 1 to 5, wherein the particulate polyamide composition (P) has a processing temperature window Δ T between the melting temperature and the crystallization temperature of at least 15°C.

7. Particulate polyamide composition (P) according to any of claims 1 to 6, wherein the particulate copolyamide (A) has a mean particle diameter D₉₀ between 50 µm and 150 µm, preferably between 80 µm and 110 µm.

8. Particulate polyamide composition (P) according to any of claims 1 to 7, wherein the particulate copolyamide (A) has a mean particle diameter D₁₀ between 10 and 40 µm, preferably between 15 and 35 µm, and most preferably between 20 and 30 µm.

9. Process for preparing a particulate polyamide composition (P) according to any of claims 1 to 8, the process comprising at least one process step, wherein first cyclic oligomers (ABc) derived from the repeating units of monomers (a-1) are extracted from the particulate copolyamide (A).

10. Process according to claim 9, wherein the extraction step employs at least one solvent selected from ethanol, water, caprolactame and mixtures thereof.

11. Process according to claim 9 or 10, wherein the particulate copolyamide (A) is additivated with at least one additive (B) by using at least one solvent.

12. Particulate polyamide composition (P) according to any of claims 1 to 8, obtained by a process according to any of claims 9 to 11.

13. Use of a particulate polyamide composition (P) according to any of claims 1 to 8 or of a particulate polyamide composition (P) obtained by a process according to any of claims 9 to 12 in a powder bed fusion method.

14. Process for preparing an article by a powder bed fusion method employing a particulate polyamide composition (P) according to any of claim 1 to 8.

15. Article, obtained by a process according to claim 15.
